# EUROPÄISCHE PATENTSCHRIFT

(11) **EP 2 356 714 B1**
(45) Veröffentlichungstag und Bekanntmachung des Hinweises auf die Patenterteilung: **02.01.2013**
(21) Anmeldenummer: 09771690.6
(22) Anmeldetag: 12.11.2009
(51) Int. Cl.: H01M 8/02, H01M 8/24, H01M 8/10

(54) **BRENNSTOFFZELLE OHNE BIPOLARPLATTEN**
FUEL CELL WITHOUT BIPOLAR PLATES
PILE À COMBUSTIBLE SANS PLAQUES BIPOLAIRES

(30) Priorität: 13.11.2008 DE 102008057253; 02.04.2009 DE 102009015619
(43) Veröffentlichungstag der Anmeldung: 17.08.2011
(73) Patentinhaber: Tedatex Industrie Gmbh, 51674 Wiehl (DE)
(72) Erfinder: BRÜNE, Bernhard, 51674 Wiehl (DE)
(74) Vertreter: Schulte & Schulte
(86) Internationale Anmeldenummer: PCT/DE2009/001614
(87) Internationale Veröffentlichungsnummer: WO 2010/054647

(56) Entgegenhaltungen:
- EP-A- 1 429 406
- US-B1- 6 194 095

## Beschreibung

Die Erfindung betrifft ein Brennstoffzellenmodul bestehend aus einem Zellenstapel mit Endplatten auf der Anoden- und der Kathodenseite mit einem Spannsystem und mit Medienanschlüssen für Sauerstoff, Wasserstoff und Kühlmedium und mit mehreren Einzelzellen, die jeweils eine Membran-Elektroden-Einheit aufweisen, die aus einer Elektrodenanode und -Kathode aus porösem, gasdurchlässigem Material und einer dazwischen angeordneten Elektrolytmembran mit Anoden- und Kathodenkatalysator bestehen und über Stromabnehmer auf der Anoden- und Kathodenseite verfügen.

Derartige Brennstoffzellenmodule sind aus Einzelzellen zusammengesetzt, die jeweils eine Anode und Kathode und eine dazwischen liegende Elektrolytmembran aufweisen. An der Anode wird Wasserstoff oxidiert, an der Kathode werden die Protonen mit dem Sauerstoff und den über einen Verbraucher und einen Stromleiter zufließenden Elektronen zu Wasser umgesetzt. Werden Anode und Kathode über einen elektrischen Leiter verbunden, fließt Strom. Außerdem wird Wärme freigesetzt. Der gesamte Vorgang kann kontinuierlich betrieben werden, d. h. es wird ständig Wasserstoff und Sauerstoff den jeweiligen Elektroden zugeführt. Bekannt sind solche Brennstoffzellen beispielsweise aus der DE 12 72 679 A1 sowie der EP 0 490 808 A1. Bei diesen bekannten Brennstoffzellen werden Elektroden mit hoher Porosität eingesetzt, damit eine große Oberfläche für die elektrochemische Umsetzung zur Verfügung steht. Diese Elektroden sind auf der Membranseite mit kathalytisch wirkenden Edelmetallpartikeln, von geringer Größe besetzt, insbesondere Partikel aus mit Platin oder Platinlegierungen, sowie mit stromführenden Schichten. Bei herkömmlichen Konstruktionen werden Sauerstoff und Wasserstoff über Bipolarplatten den Elektroden zugeführt, wobei in diese Bipolarplatten feine Gänge gefräst sind, um Wasserstoff und Sauerstoff auf den Elektrodenoberflächen fein zu verteilen. Von dort werden durch Diffusion Sauerstoff und Wasserstoff zu den Reaktionszonen zu transportiert. Diese Bipolarplatten müssen auf beiden Seiten der Membran-Elektroden-Einheit angeordnet sein und sind in der Herstellung aufwendig und teuer. Die oben genannten Gänge dienen sowohl als Zu- wie auch gleichzeitig als Ableitung der an dem Prozess zur Erzeugung von elektrischem Strom beteiligten Medien. Nachteilig ist weiter, dass sie sowohl unvermischt zugeführtes Gas zuführen, als auch Restgase und Reaktionsprodukte abführen müssen. Die Kuppen, der zwischen den Gängen verbleibenden Stege dienen der Stromweiterleitung von den Elektroden auf die Bipolarplatten, während der Gangquerschnitt die erforderliche Gasmenge führen muss. Der daraus folgende konstruktive Konflikt -große Stromübertragungsfläche gegen großen Strömungsquerschnitt- ist nur schwer oder gar nicht zu lösen. Bipolarplatten bauen platzaufwendig und beeinflussen die Abmessungen des gesamten Brennstoffzellenmoduls stark. Sie müssen darüber hinaus gut elektrisch- und wärmeleitend sein und müssen die Gasdiffusion von einer Einzelzelle zur nächsten verhindern, beispielsweise durch so genannte Gasbarrieren aus entsprechenden Materialschichten, die in die Bipolarplatten eingelassen sind. Die Gasdiffusion in Bipolarplatten ist nur schwer zu unterbinden, sodass die Gasverlustrate relativ hoch sein kann, bzw. der Gesamt-Brennstoffzellen-Wirkungsgrad niedrig. Bipolarplatten nehmen Gaskanäle auf um die Durchleitung von Prozessmedien zu ermöglichen. Sie sollen die mechanische Strukturbildung des Zellenstapels begünstigen. Nachteilig ist, dass Bipolarplatten nicht elastisch sind, also eine starre Struktur aufweisen. Weiter ist erforderlich, dass sie in Gegenwart aggressiver Medien chemisch und elektrochemisch stabil und bei Betriebstemperaturen bis 200 °C dauerfest sind. Die Suche nach geeigneten Werkstoffen bzw. Werkstoffkompromissen und Fertigungsverfahren ist deshalb bisher nicht zufrieden stellend verlaufen und führt z. B. zu großen Wandstärken der Bipolarplatten und damit zu ungünstigen Bauhöhen des gesamten Zellenstapels. Auch die Auskopplung, der während des Prozesses entstehenden Prozesswärme ist nicht unproblematisch. Entweder die Wärme wird durch Abstrahlung vom Stapelkörper in die Umgebung transportiert und eine geringe Stapelleistung akzeptiert oder es werden in die Bipolarplatten Kühlkanäle eingebracht, mit erheblichen Nachteilen und Kosten in der Fertigung, insbesondere bei Konstruktionen, die mit Verfahren, die dem Spritzguss ähnlich sind, hergestellt werden. Nachteilig sind dabei die großen Bauhöhen aufgrund der Materialeigenschaften von Bipolarplatten und womöglich doppelter Gasbarriere. Üblich sind deshalb Stapelkonstruktionen, die Kühlzellen in einem bestimmten Raster zwischen den Einzelzellen vorsehen, indem entsprechende Einzelzellen weggelassen werden. Diese Bauart ist sinnvoll, wenn größere Stapelleistungen zu erzielen und Wärmemengen abzuführen sind, allerdings zu Lasten der Stapelhöhe, bzw. der Leistungsdichte pro Volumeneinheit eines Stapels. Die bipolare Verschaltung eines solchen Stapels bewirkt, dass durch die Reihenschaltung der Einzelzellen entsprechende Ströme durch die gesamte Zelle zu leiten sind, bei einem zum Teil ungünstigen und sicherheitstechnisch nicht zugelassenen Spannungspotential. Die anschließende Konvertierung der elektrischen Größen (praxisgerechte Skalierung) ist nur mit teuren elektrischen Systemen möglich. Darüber hinaus fällt der gesamte Stapel aus, wenn eine Einzelzelle ausfällt. Die Reparatur solcher Stapel ist nur schwer oder gar nicht möglich, die Rückgewinnung teurer Materialien (Katalysatorpartikel) gelingt nur, wenn der Stapel demontiert, also zerstört wird. Des Weiteren können sich spontan elektrolytisch wirkende "Nester' bilden, wenn Bauteile, wie die Bipolarplatten, in einem sauren Milieu arbeiten und Strom fließt. Die starre Struktur der Bipolarplatten bewirkt, dass sich Fertigungstoleranzen und ungleichmäßige Wärmedehnungen der am Stapel beteiligten Bauteile (Membran-Elektroden-Einheiten, Bipolarplatten, Dichtungen, Endplatten) über den Stapelquerschnitt aufsummieren und zur Schiefstellung des Stapels führen. Das mechanische Kompensieren der Stapelrichtung bei der Montage durch entsprechendes Vorspannen durch die Spannvorrichtung führt dann zu Undichtigkeiten auf der einen Seite und Kantenquetschen auf der anderen, vielfach einhergehend mit Schädigungen der Bauteile, insbesondere der Dichtungen. Nachteilig ist ferner, das der gesamte Stapel vor dem eigentlichen Start auf Betriebstemperatur zu bringen ist, mit erheblichen Energiemengen, die von einer dafür vorgesehenen Energiequelle bereitzustellen sind, z.B. einer entsprechend zugeschalteten Batterie. Auf diese Weise können Schädigungen der Membran und der Katalysatoren weitgehend vermieden werden. Auch nach der US 6,194,095 B1 und der EP 1 429 406 A weist ein Brennstoff grundsätzlich zwei endseitige Platten mit Spannsystem auf. Ferner sind sie mit Stromabnehmern für den durch den Zellenstapel hindurch geführten Strom ausgerüstet.

Der Erfindung liegt daher die Aufgabe zu Grunde, durch neue Anordnungen und durch neue Bauelemente unter Verzicht auf die Bipolarplatten ein gut herstellbares und klein bzw. schmal bauendes Brennstoffzellenmodul zu schaffen, dem der Strom direkt aus der entsprechenden Einzelzelle abzunehmen ist.

Die Aufgabe wird gemäß der Erfindung dadurch gelöst, dass die Medienzuleitungen und die Medienableitungen einem Kühl- und Medienmodul zugeordnet und mit diesem verbunden sind, das unter Verzicht auf Bipolarplatten nur der Bereitstellung von Kühl- und Gaskanälen und der Stapelbildung und über Elektrodenabdeckungen der Ableitung nicht über der Durchleitung des Stromes dienend ausgebildet ist und dass jeweils auf beiden Seiten des Kühl- und Medienmoduls entweder die Wasserstoffelektrode oder die Sauerstoffelektrode der Membran- Elektroden-Einheit der benachbarten Einzelzelle angeordnet ist.

Bei einer derart ausgebildeten Einzelzelle, die wie bisher mit weiteren Einzelzellen zu Brennstoffzellenmodulen vereinigt werden kann, ist es erstmals möglich, auf Bipolarplatten zu verzichten, weil das Kühl- und Medienmodul einfach ausgebildet ist, mit geringem Aufwand hergestellt werden kann und voll funktionsfähig ist, obwohl es nicht elektrisch leitend sein muss und weil auf eine Gasbarriere völlig verzichtet werden kann. Durch die nun mögliche einfache Verschaltung wird über die zugeordneten Stromfahnen der Strom dort abgenommen, wo er entsteht, d. h. er braucht nicht durch den gesamten Stapel hindurchgeleitet zu werden, wie beim Stand der Technik. Darüber hinaus ist der Aufbau des Kühl- und Medienmoduls wesentlich einfacher als der der Bipolarplatte, weil lediglich die Funktionsräume, d. h. also die Mediumkanäle benötigt werden, ohne die Notwendigkeit besonders elektrisch leitendes Material zu verwenden bzw. eine Gasbarriere oder Ähnliches einzusetzen. Aufgrund des einfachen Aufbaus ist eine Variabilität gegeben, die die Möglichkeit gibt, nicht nur klein bauende, sondern vor allen Dingen auch eine geringe Stapelhöhe aufweisende Brennstoffzellen bzw. Brennstoffzellenmodul zu erstellen. Gegenüber bekannten Konstruktionen kann die Stapelhöhe um den Faktor drei reduziert werden. Dies ist gleichzeitig mit dem Vorteil verbunden, dass auf die platzaufwendigen und komplizierten Bipolarplatten völlig verzichtet werden kann und dass darüber hinaus jede Einzelzelle separat geschaltet und beliebig seriell, parallel oder einzeln oder in Blöcken bzw. Teilstapeln geschaltet werden kann, sodass beispielsweise bei Ausfall einer Zelle in einem Zellenpaket problemlos die Gesamtzelle als solche weiter in Betrieb bleiben kann. Darüber hinaus können Reservezellen vorgesehen sein, die zugeschaltet werden und natürlich können defekte Zellen genauso problemlos abgeschaltet werden, bis eine Generalüberholung erforderlich ist.

Einen genauen Sitz des Kühl- und Medienmoduls und der übrigen Funktionseinheiten im Zellenrahmen wird dadurch ermöglicht, dass das Kühl- und Medienmodul mit Kühlkanälen und Zuleitungskanälen für Gas aus einer elastischen Struktur, vorzugsweise aus zwei oder mehr Bauteilen bestehend ausgebildet ist. Diese Bauteile, aus dem die Dehnung zulassenden Material bzw. der elastischen Struktur erleichtern die Fixierung und Ausrichtung in der Stapelachse der einzelnen Module und Funktionseinheiten, wobei für diese Ausbildung vor allem Edelstahl und Blech in Frage kommt. Wenn sich diese Bauteile entsprechend dehnen, wird damit eine Verspannung gegenüber dem Zellenrahmen bzw. den Endplatten und eine gleichmäßige Flächenpressung der Membran-Elektroden-Einheit und Ausgleich von Fertigungstoleranzen und Wärmedehnungen erreicht, was zur verbesserten Funktion und zur Vermeidung von Undichtigkeiten und Ähnlichem führt. Dieser Ausgleich ergibt sich insbesondere dann, wenn der Innenstapel eines Zellenstapels über elastisch ausgebildete oder versetzt angeordnete Abstandshalter eine elastische Verformung und Atmung in der Stapelachse zulassend ausgebildet ist.

Weiter vorne ist bereits darauf hingewiesen worden, dass als elastisch dehnbares Material vor allem Blech vorgesehen ist, wobei die Erfindung lehrt, dass das Kühl- und Medienmodul bzw. die bis zu sieben Bauteile aus Blech, Folie oder Kaltband aus Edelstahl bestehend ausgebildet ist. Edelstahl zeichnet sich insbesondere dadurch aus, dass Beeinträchtigungen durch den Wasserstoff und andere aggressive Bestandteile nicht auftreten können, so dass hohe Standzeiten der Module erreicht werden.

Nach einer weiteren Ausbildung ist vorgesehen, dass das Kühl- und Medienmodul aus wie oben aus bis zu sieben Bauteilen, aus Kunststoff, vorzugsweise aus Kunststofffolie bestehend ausgebildet ist. Auch bei dieser Ausbildung ist neben der insgesamt vorteilhaften Elastizität hervorzuheben, dass auch aggressive Medien im Rahmen der Brennstoffzellentechnik diesen Kunststoff nicht beeinflussen können. Außerdem ist die Elastizität hervorzuheben.

Die elastische Dehnung des Materials wird dadurch sichergestellt, dass der Druck in den Kühlkanälen und den Zuleitungskanälen für Gas veränderbar und der gewünschten Flächenpressung an der Membran-Elektroden-Einheit entsprechend einstellbar ist. Gemeint damit ist der Innenstapel, der sich innerhalb des Außenstapels bedingt in der Ausdehnung verändern kann.

Bei der Blechausführung können dünnwandigste Bleche zum Einsatz kommen, also praktisch Folien, weil gemäß der Erfindung vorgesehen ist, dass die Elektrodenabdeckungen, Dichtungsbleche, Federbleche und die Bauteile des Kühlkanals und der Zuleitungskanälen durch Abstandshalter getrennt sind. Dabei ist die Zahl, Form und Anordnung der Abstandhalter so gewählt, dass der Öffnungsquerschnitt des betreffenden Kanals jeweils über seine gesamte Erstreckung gewährleistet bleibt.

Sowohl Sauerstoff wie auch Wasserstoff sollen im Bereich der Elektrolytmembran und des darauf liegenden Katalysators die chemische Reaktion bzw. Aufteilung des Wasserstoffs und Reaktion des Sauerstoffs ermöglichen, was insbesondere dadurch möglich und gesichert ist, dass die Zuleitungskanäle für Gas eine partielle Zuleitung aufweisend und eine partielle Gasverteilungszone und eine weitere Gasverteilungszone bedienend ausgebildet sind. Hiermit wird sichergestellt, dass über die gesamte Fläche der Elektrolytmembran die beschriebenen Abläufe erreichbar sind und zwar weitgehend über die gesamte Fläche völlig gleichmäßig. Dies bedeutet, dass aus den Gaskanälen die Gaskomponenten nicht nur an einer Stelle ausströmen und über die Elektroden der Elektrolytmembran zugeführt werden, sondern über die gesamte Fläche verteilt an mehreren Stellen, sodass damit auch gleichmäßig große und gleichmäßig ausgebildete Gasverteilungszonen mit dem Gas versorgt werden können. Versorgt werden die einzelnen Abschnitte der Elektroden durch die Gasverteilungszonen mit jeweils mindestens einem Gasdurchlass vom Gaskanal durch die Elektrodenabdeckung bis zur Elektrode.

Eine besonders gleichmäßige Versorgung der beschriebenen Gasverteilungszonen erreicht man dadurch, dass bei der Blechausführung des Kühl- und Medienmoduls oder generell die Elektrodenabdeckung der Gaskanäle des Kühl- und Medienmoduls verteilt angeordnete Gasdurchlässe für Wasserstoff oder Sauerstoff sowie Ableitungen für Restwasserstoff, Restsauerstoff und Reaktionsprodukte auf der der Elektrodenanode und -kathode zugewandten Seite aufweist. Damit ist erstmals sichergestellt, dass die Projektgase aus den Gaskanälen über die Gasdurchlässe unvermischt und gleichmäßig auf die Elektroden geführt werden können und die Reaktionsprodukte, vermischt mit dem nicht immer vollständig ausgenutzten Wasserstoff mit seinen Restmengen gezielt so abgeführt werden, dass das über den Gaskanal und die Elektrodenabdeckung einströmende Wasserstoffgas nicht beeinträchtigt wird und nach Behandlung wieder eingesetzt werden kann. Das gleiche gilt auf der Sauerstoffseite, wobei es nach dem Stand der Technik noch viel problematischer ist, dass auch als Reaktionsprodukt Wasser mit anfällt, das dann abgeführt werden muss. Bei der vorliegenden Lösung sind für die Ableitung gesonderte Kanäle bzw. Rillen vorgesehen, durch die diese Restgase und Reaktionsprodukte schadlos abgeführt werden können, wobei die Vermischung mit den Prozessgasen weitgehend vermieden wird, insbesondere deshalb, weil die Prozessgase auf der einen Seite der Elektrodenabdeckung zugeführt und die nicht verbrauchten Prozessgase und Reaktionsprodukte auf der anderen Seite der Elektrodenabdeckung separiert abgeführt werden.

Um sicherzustellen, dass die Restprodukte aus den Ableitungen sich auch vollständig entfernen lassen bzw. selbsttätig abströmen, ist vorgesehen, dass in den als durchgehende Rillen ausgebildeten Ableitungen der Druck kleiner als in den Gaskanälen eingestellt ist, sodass damit in diesen Ableitungen ein gewisser Unterdruck entsteht, der dafür sorgt, dass die Restgase und Reaktionsprodukte sicher durch die Ableitungen abströmen.

Wie bisher üblich besteht die Möglichkeit, die Schichtung der Elektrolytmembran und der Elektroden sowie des Kühl- und Medienmoduls planar mit einem Fächerwinkel von 180° zur verwirklichen, d. h. die einzelnen Funktionsschichten jeweils parallel verlaufend zu verwirklichen und zwischen den Zellenrahmen zu fixieren.

Nach einer Weiterbildung ist vorgesehen, dass die Einzelzellen als Fächer geschichtet ausgebildet und angeordnet sind, mit einem Fächenivinkel von weniger als 180°, was zu einer Erhöhung der aktiven Reaktionsfläche in der Größenordnung von bis zu 40% gegenüber der planaren Anordnung bringt, indem die gestreckte Länge des Modulfächers und der Reaktionszone größer ist als die entsprechende Länge ihrer Projektion.

Eine weitere Möglichkeit der Erhöhung der aktiven Reaktionsfläche im Stapel ist erfindungsgemäß die, bei der die Einzelzellen als gestapelte Fächer geschichtet ausgebildet und angeordnet sind, wobei damit natürlich immer nur die aktive Zone gemeint ist, nicht die des Zellenrahmens. Die Fächerkuppen werden dabei in die Fächermulden der nächsten Zelle eingebettet.

Eine weitere Ausführungsform ist der parallele Fächer, in dem die Fächerkuppen auf den Fächerkuppen der nächsten Zelle stehen.

Weiter vorne ist bereits darauf hingewiesen worden, dass es möglich ist, einen Brennstoffzellenstapel bzw. ein entsprechendes Modul einfach und sicher zu montieren, weil die Kühlkanäle und auch die Gaskanäle oder die Zuführungskanäle für Gas aus einem eine elastische Dehnung zulassenden Material gefertigt sind. Die vorteilhafte Montage wird nun dadurch möglich gemacht, dass der Zellenstapel aus einem äußeren Paket von Bauteilringen und Dichtringen den Zellenrahmen sowie den Innenstapel bildend bzw. einem als Außenstapel dienenden Zellenrahmen sowie den Innenstapeln aus Membran-Elektroden-Einheit und dem Kühl- und Medienmodul bestehend ausgebildet ist. Dadurch kann das Paket aus Membran-Elektroden-Einheiten und Kühl- und Medienmodulen quasi in das Paket aus Dichtringen eingesetzt werden, um dann durch das Einleiten des Mediums und der Gase das definierte Spannen der Bauteile des Innenstapels gegen den Zellenrahmen bzw. den Außenstapel sicher zu erreichen. Vorteil ist, dass bei der Montage das innere Paket mit dem äußeren Ring einfach eingelegt und eingeschoben werden kann, um dann erst im Nachhinein die Passgenauigkeit zu erreichen, durch mechanisches Vorspannen und / oder zusätzliche Spannkräfte, oder durch die Mediendrücke aufgebracht.

Besonders vorteilhaft ist es, wenn die Länge des Innenstapels gegenüber der Länge des Außenstapels ein definiertes Maß (Untermaß, Übermaß) aufweist, damit durch das Zusammenwirken von Vorspannung und Mediendruck eine möglichst gleichmäßige und definierte Flächenpressung im Bereich der Membran-Elektroden-Einheit einstellen kann. Bei kleinerer Höhe des Innenstapels sind die Bauteile nicht gespannt und locker. Erst über die Mediendrücke erfolgt die erforderliche Flächenpressung und die Anpassung an Fertigungstoleranzen und thermisch bedingte Dehnungen. Die mechanische Vorspannung wird durch das Spannsystem erzeugt. Federbleche zwischen den Kühlkanalblechen oder elastische oder versetzt angeordnete Abstandshalter bewirken einen Federeffekt in der Stapelachse.

Der so genannte Zellenrahmen wird von den Membran-Elektroden-Einheiten, den Kühl- und Medienmodulen und entsprechenden Dichtungsringen gebildet. Um hier nun die Versorgung der einzelnen Funktionsräume besonders geschickt zu verwirklichen, sieht die Erfindung vor, dass der Zellenstapel Kühlkanalbleche gleicher Länge und Breite aufweist, wobei die Kühlkanalbleche die einzelnen Funktionsräume mit den dazwischen liegenden Dichtungen begrenzen und der von ihnen gebildete Zellenrahmen die notwendigen Versorgungskanäle aufweist, von denen Querkanäle, Gasdurchlässe, Verbindungskanäle, Verteilkanäle und -öffnungen sowie andere Strukturen als Anschluss der Funktionsräume abgehend vorgesehen sind. Damit kann auf einfache und sichere Art und Weise die Versorgung der Funktionsräume hergestellt werden, insbesondere natürlich auch dadurch, dass in den Elektrodenabdeckungen der Gaskanäle die Gasdurchlässe sowie auch die Ableitungen vorgesehen sind. Da diese einzelnen Funktionsräume der Kühl- und Medienmodule Zellen von dem gleichen Versorgungskanalabschnitt mit dem Gas aber auch mit dem Kühlmedium beschickt werden, ist sichergestellt, dass die einzelnen Zellen auch jeweils gleichmäßig beschickt und dauernd gleich bleibend beschickt werden können.

Da die einzelnen Funktionsräume unterschiedlich mit Wasserstoff, Sauerstoff und Kühlmedium zu versorgen sind, ist ergänzend vorgesehen, dass die dem Zellenrahmen zugeordneten Versorgungskanäle für Wasserstoff, Sauerstoff und das Kühlmedium sowie Entsorgungskanäle für Reaktionsprodukte und überschüssige Gase parallel und quer verlaufend ausgebildet und die erforderlichen Querschnitte für die Gasströmung und Strukturbildung dimensioniert sind. Es müssen somit dem Zellenrahmen mindestens sechs solcher Versorgungskanäle parallel verlaufend zugeordnet werden, was aber wegen der Abmessungen problemlos möglich ist, auch wenn man berücksichtigen muss, dass eine einzelne Zelle nur 2 - 3 mm Breite bzw. Dicke aufweist.

Die Beanspruchung der Zellwände bzw. der gesamten Einzelzelle durch unterschiedliche Temperaturen im Kühlmedium werden dadurch minimiert, dass der Kühlstrom in den Kühlkanälen von Einzelzelle zu Einzelzelle gegenläufig geführt und von zwei entkoppelten Kühlsystemen versorgt ist. Damit wird erreicht, dass über die gesamte Führung des Kühlmediums in etwa die gleichen Belastungen bzw. Temperaturen herrschen, weil eben wechselseitig das die niedrigste Temperatur aufweisende Kühlmedium in den Zellenstapel eingeleitet wird und zwar immer so wechselweise, dass der beschriebene Ausgleich sich automatisch einstellt. Bei dieser Anordnung sind mindestens acht solcher Versorgungskanäle parallel verlaufend vorzusehen, jeweils Zuleitung und Ableitung für die Sauerstoffseite, Wasserstoffseite, Kühlkreislauf 1 und Kühlkreislauf 2. Mit getrennten Kühlkreisläufen, einer für die Sauerstoffseite, einer für die Wasserstoffseite, werden eindiffundierte Restgasanteile getrennt geführt und ggf. aufbereitet und elektrische Potentiale getrennt.

Um eine zweckmäßige Einzelbehandlung für jede einzelne Einzelzelle zu ermöglichen, ist es besonders von Vorteil, wenn jede Einzelzelle Stromführungsschichten oder Stromfahnen aufweist, die jeweils durch die Außenwand des Zellenstapels über Stromfahnen nach außen geführt werden. Die Stromfahnen der einzelnen Zellen können mit Steckern versehen werden oder sie sind durch Klemmung, Verschweißung, Bonden, Löten oder Kleben verschaltet. Über die Stecker oder anderen Verschaltungsarten ist dann die parallele oder auch Verschaltung in Reihe problemlos zu verwirklichen, sodass eine vielseitige Verwendung eines solchen Brennstoffzellenmoduls bzw. einer Gesamteinheit möglich ist.

Statt die Elektroden selber falls notwendig stromleitend auszubilden, besteht auch die Möglichkeit, die Oberfläche der Elektrodenanode und -kathode mit der elektrisch leitenden Stromführungsschicht zu versehen. Dies bringt Vorteile sowohl bei der Fertigung wie auch bei der Verringerung der Herstellungskosten.

Das Medienmodul wird nicht als Stromleiter zur Durchleitung des Stroms genutzt, jedoch die beiden Elektrodenabdeckungen zur Ableitung des Stroms. Dazu ist es von Vorteil, wenn die Elektroden stromführend sind und elektrisch leitend und auf der Elektrodenabdeckung mit gleichmäßiger Flächenpressung aufliegen. Die Elektrodenabdeckung ist dabei die Stromführungsschicht. Dadurch kann der entstehende Strom gezielt abgenommen und ausgewertet werden und zwar jeweils pro Einzelzelle.

Eine andere Ausführung für die Stromführung sieht vor, dass die Stromführungsschicht in der Ebene zwischen der Elektrodenanode und -kathode und dem Kühl- und Medienmodul angeordnet ist und der Strom über diese elektrisch leitende Ebene abgeleitet wird. Die Elektrode ist stromleitend.

Bei der Anordnung der Stromführung auf der der Membran zugewandten Elektrodeseite ist die Elektrode zweckmäßigerweise wärmeleitend, porös bezüglich Gasdiffusion und -konvektion und chemisch und thermisch stabil ausgeführt.

Um die hohen Temperaturen am Zellenstapel aufzufangen bzw. unschädlich zu machen, sind der oder die Zellenstapel in einem belüftbaren Stapelgehäuse angeordnet, das über Leistungspole und Schnittstellen für die Medienversorgung, die Be- und Entlüftung des Stapels sowie der Spannungs- und Drucküberwachung verfügt. Durch die Belüftung des Stapelgehäuses kann eine zulässige Temperatur an der Außenwand des Stapelgehäuses eingehalten werden. Über die Schnittstellen werden alle zur Steuerung, Regelung und Versorgung des Moduls erforderlichen Leitungen zugeführt.

Eine zweckmäßige Verschaltung des Zellenstapels ist erfindungsgemäß eine parallele Verschaltung der Teilstapel und Reihenschaltung der Zellen in einem Teilstapel oder auch jede andere Verschaltung, z. B. parallele Zellenschaltung.

Der Zellenstapel besteht zweckmäßig aus mehreren Teilstapeln, von denen ein Teilstapel als Startstapel für die anderen Teilstapel dienend ausgebildet und geschaltet und mit einem Wärmetauscher verbunden ist. Das Aufheizen eines Teilstapels ist einfacher und erfordert nur wenig externe Energie, z. B. einer Batterie. Nachdem der Startstapel gestartet wurde, können über diesen Startstapel dann die übrigen Teilstapel auf Starttemperatur gebracht werden. Er kann darüber hinaus als redundantes Notstromsystem eingesetzt werden.

Die Erfindung zeichnet sich insbesondere dadurch aus, dass die Stapelhöhe wesentlich reduziert werden kann, weil beispielsweise die einzelnen Funktionsräume durch entsprechend dünnwandige Bauteile, vorzugsweise aus Blech oder Folien aus Edelstahl begrenzt werden, wobei gegenüber bekannten Konstruktionen immerhin eine Reduzierung bis zu dem Faktor drei möglich ist. Vorteilhaft ist weiter, dass die einzelnen Zellen eines solchen Zellenpaketes bzw. eines Brennstoffzellenmoduls mehrere Möglichkeiten der Verschaltung aufweisen, wobei sich als besonders vorteilhaft herausstellt, dass die Stromführung für jede Einzelzelle jeweils durch die Außenwand über Stromfahnen nach außen geführt werden. Dadurch kann die Verschaltung beliebig seriell oder parallel, einzeln oder in Blöcken bzw. Teilstapeln erfolgen, durch Verschaltung der Stromfahnen. Vorteilhaft ist weiter, dass dadurch die Möglichkeit gegeben ist, jede Einzelzelle separat abzuschalten oder auch zuzuschalten, z.B. durch Trennung oder Unterbrechung der Verschaltung, wenn beispielsweise Reservezellen vorgehalten werden. Bei einem derartigen Brennstoffzellenmodul kann die aktive Reaktionsfläche gezielt dadurch erhöht werden, dass die Einzelzellen als gestapelte Fächer oder als parallele Fächer verwirklicht werden. Bei der planaren Stapelausführung beträgt der Fächerwinkel 180°, das heißt, die Projektion des Fächers bzw. der aktiven Reaktionsfläche entspricht etwa der Querschnittsfläche des Innenstapels. Wird der Fächerwinkel reduziert, z.B. auf 90° vergrößert sich die aktive Reaktionsfläche um ca. 40% bzw. sie ist um 40% größer ist als ihre Projektionsfläche. Bei vergleichendem Volumen des gesamten Brennstoffzellenmoduls hätte dieser theoretisch eine etwa 40% größere Nennleistung. Dadurch dass die Gasräume und die Bauteile entkoppelt sind, können elektrolytische Effekte in der Zelle und im Brennstoffzellenmodul vermieden werden. Auch ist von großem Vorteil, dass die Gasdiffusionszonen und -kanäle für die Gasver- und -entsorgung entkoppelt sind bzw. getrennt ausgeführt sind, sodass eine immer gleichmäßige Führung des Gases und auch des Kühlmediums sichergestellt ist. Das Kühlmedium ist über zwei entkoppelte Kühlsysteme gegenläufig geführt, um so die Zellen gleichmäßig zu belasten. Hervorzuheben ist schließlich, dass durch die Möglichkeit, den in den Zellenrahmen einzubringenden Innenstapel aus Membran-Elektroden-Einheiten und Kühl- und Medienmodulen je nach gewünschter Betriebsart gezielt mit Untermaß oder Übermaß zu verwirklichen, die Montage wesentlich erleichtert ist. Falls mit Untermaß gefertigt wird, werden durch den hydraulischen bzw. pneumatischen Effekt der neuen Bauteilanordnung nicht nur Fertigungstoleranzen vorteilhaft kompensiert, sondern auch Schiefstellungen durch thermisch bedingte Dehnungen der beteiligten Bauteile. Insbesondere gibt das Kühlmedium im Kühl- und Medienmodul aufgrund seiner hydraulischen bzw. pneumatischen Wirkung die Möglichkeit die Wärmeausdehnung zu korrigieren und das vorherige Untermaß gezielt und genau auszugleichen. Wird mit Übermaß gefertigt, kann die mechanisch erzeugte Vorspannung gezielt durch die hydraulische bzw. pneumatische Wirkung der Gase verstärkt und eingestellt werden, sodass dann die Zuordnung der einzelnen Bauteile optimal ist. Es können damit definierte, durch gezielt gefertigtes Übermaß Anpressdrücke im Bereich der Membran-Elektroden-Einheit mechanisch erreicht und verwirklicht werden, wie auch die Anpassung an unterschiedliche Betriebszustände. Vorteilhaft ist schließlich noch, dass die Stromableitung auf den Oberflächen der Elektroden erfolgen kann, sodass diese wenn eine Stromleitung notwendig ist, vereinfacht hergestellt werden können. Hierbei werden die porösen Elektroden mit einer elektrisch leitenden Schicht beispielsweise aus kohlenstoffbasierten Substraten bzw. Nanomaterialien beschichtet, sodass die Herstellung der Elektroden insgesamt vereinfacht wird.

Weitere Einzelheiten und Vorteile des Erfindungsgegenstandes ergeben sich aus der nachfolgenden Beschreibung der zugehörigen Zeichnung, in der ein bevorzugtes Ausführungsbeispiel mit den dazu notwendigen Einzelheiten und Einzelteilen dargestellt ist. Es zeigen:
- Figur 1: eine einzelne Brennstoffzelle in vereinfachter Wiedergabe gemäß Stand der Technik,
- Figur 2: ein vereinfacht wiedergegebenes Brennstoffzellenmodul gemäß Stand der Technik mit Bipolarplatte,
- Figur 3a-3c: Schnitte durch eine Einzelzelle mit unterschiedlicher Anordnung der stromleitenden Schicht,
- Figur 4: eine vereinfachte Wiedergabe einer Einzelzelle in planarer Schichtung,
- Figur 5: eine Prinzipskizze einer Einzelzelle in planarer Ausbildung mit aus Kunststoff bestehenden Kühl- und Medienmodulen,
- Figur 6, 6a: ein Brennstoffzellenmodul in vereinfachter Wiedergabe in Form eines gestapelten Fächers,
- Figur 7: planar ausgebildete Einzelzellen in Blech, Kaltband oder Folien-Edelstahlausführung,
- Figur 7a, 7b: vergrößerte Wiedergabe und gefächerte Anordnung der Ausbildung nach Figur 7
- Figur 8: ein Ausschnitt aus Figur 7 in vergrößerter Wiedergabe der Reaktionszonen für Wasserstoff und Sauerstoff,
- Figur 9, 9a: eine Ausführung des Brennstoffzellenmoduls in Form eines parallelen Fächers,
- Figur 10, 10a, 10b: ein Brennstoffzellenmodul mit außenwandseitig angeordneten Steckern in verschiedenen Wiedergaben,
- Figur 11: einen vereinfachten Schnitt mit Anschlüssen an die Funktionsräume,
- Figur 12, 12a, 12b: einen weiteren vereinfachten Schnitt mit Anschluss an die Funktionsräume, hier für Wasserstoff,
- Figur 13, 13a,13b: ein vereinfachter Schnitt durch ein Brennstoffzellenmodul mit paralleler Zellenverschaltung, Kühlkreislauf, und mehrere Teilstapel zeigend,
- Figur 14, 14a, 14b: vereinfachte Ansicht auf die Kühlkanaldichtung,
- Figur 15, 15a, 15b: vereinfachte Darstellung der Elektrodenabdeckung einer Membran-Elektroden-Einheit,
- Figur 16 - 16e: verschiedene Ansichten des Brennstoffzellenmoduls,
- Figur 17 - 17c: vereinfachte Wiedergaben bezüglich Kühlmedium, Sauerstoff- und Wasserstoffführung,
- Figur 18: Varianten von Stromfahnenverschaltungen und
- Figur 19: Brennstoffzellenmodul mit Kühlluftversorgung.

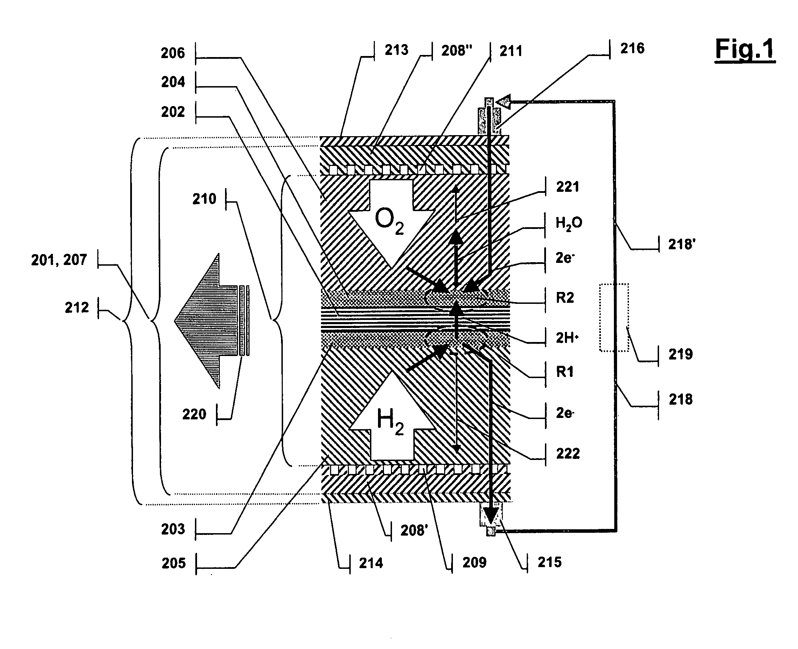

Figur 1 gibt vereinfacht eine Einzelzelle 207 eines Brennstoffzellenmoduls 212 nach dem Stand der Technik wieder. Die Elektrolytmembran 202 weist den Anodenkatalysator 203 und den Kathodenkatalysator 204 auf sowie die vergrößert wiedergegebene Anode 205 und Kathode 206, d. h. also die Elektroden. Die Kathode 206 und die Anode 205 werden über Bipolarplatten 208', 208" begrenzt, die auf der Gasverteilungs-Anodenseite 209 und Gasverteilungs-Kathodenseite 211 Kanäle aufweist und jeweils gegenüber Endplatten 213 bzw. 214. Der hier nur angedeutete Zellenstapel ist mit 201 bezeichnet.

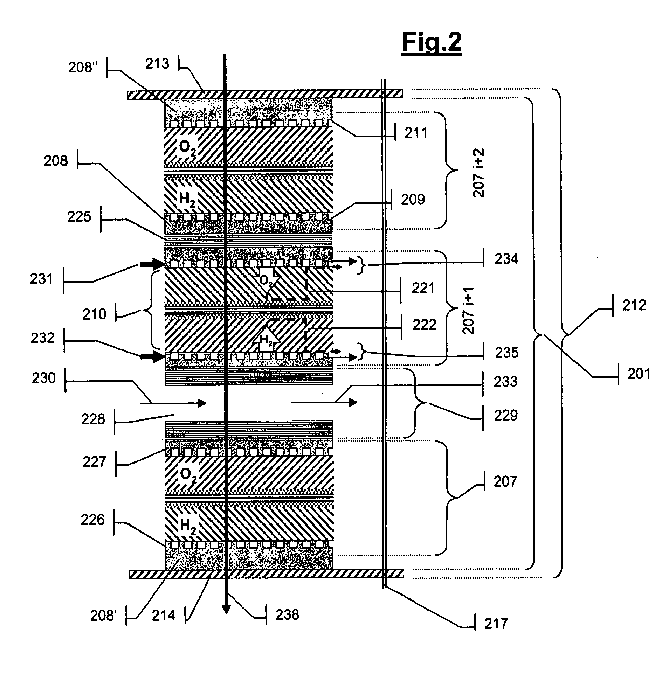

Die Darstellung nach Figur 1 und auch nach Figur 2 betrifft den Stand der Technik. Gezeigt ist die Zuführung von Sauerstoff (02) und Wasserstoff (H2). Mit R1 und R2 sind die Reaktionszonen für den Wasserstoff bzw. den Sauerstoff gekennzeichnet. Der Stromableitung dient der Stromabnehmer 215 bzw. 216, die über den Stromleiter 218, 218' und den Verbraucher 219 miteinander verbunden sind. Der Wasserstoff (H2) strömt über die Gasverteilung an der Gasverteilungs-Anodenseite 209 zur Anode 205 und diffundiert durch diese bis zur Reaktionszone R1. Der Anodenkatalysator 203 bewirkt die Aufteilung (H2-Oxidation) des Wasserstoffes in Protonen und Elektronen. Die Protonen werden durch die Elektrolytmembran 202 transportiert, und zwar von der Reaktionszone R1 zur Reaktionszone R2. Die Elektronen werden über die Anode 205 durch die Bipolarplatte 208' bis zum Stromabnehmer 215 geleitet. Vom Stromabnehmer 215 werden die Elektronen überden Stromleiter 218 und den Verbraucher 219 zum Stromabnehmer 216 geleitet. Der Sauerstoff (02) strömt über die Gasverteilungs-Kathodenseite 211 zur Kathode 206 und diffundiert durch die Kathode 206 bis zur Reaktionszone R2. Der Kathodenkatalysator 204 bewirkt die Sauerstoffreduktion zu Wasser unter Beteiligung der Protonen aus der Reaktionszone R1 und den über den Stromleiter 218' zufließenden Elektronen. In den Reaktionszonen entsteht Prozesswärme 220, die abgeführt werden muss. In der Regel wird diese Prozesswärme 220 über die Elektroden und Bipolarplatten 208', 208" in ein - in entsprechenden Kühlkanälen - strömendes Kühlmedium übertragen. Auf der Gasverteilungsanodenseite 209 und der Gasverteilungskathodenseite 211 treten Reaktionsprodukte und nicht verbrauchte Restgase unter 221, 222 aus den Elektroden 205, 206 vorzugsweise durch Konvektion aus.

Figur 2 zeigt eine Ausführung eines Brennstoffzellenmoduls 212, das aus einem Zellenstapel 201 mit einer Vielzahl von Einzelzellen 207, 207i+1, 207i+2 besteht, wobei auf den beiden Seiten der Membran-Elektroden-Einheit 210 einer Einzelzelle 207 jeweils eine Bipolarplatte 208 angeordnet ist. Der Zellenstapel 201 wird auf jeder Seite durch Endplatten, die mit 213 und 214 bezeichnet sind, abgedeckt. Eingezeichnet ist hier auch die Gasbarriere 225 in einer der Bipolarplatten 208. Die Plusseite der Bipolarplatten ist mit 226, die Minusseite mit 227 gekennzeichnet, während die Kühlkanäle das Bezugszeichen 228 aufweisen. 229 ist eine Kühlzelle, während die Mediumzuleitung für das Kühlmedium das Bezugszeichen 230, für den Sauerstoff 231 und Wasserstoff 232 aufweist. Die Ableitung des Kühlmediums ist mit 233 bezeichnet. Mit 234 ist die sauerstoffseitige Ableitung bezeichnet, mit nicht verbrauchtem Sauerstoff und den Reaktionsprodukten 221, insbesondere Wasser und Wasserdampf. Mit 235 ist wasserstoffseitige Ableitung bezeichnet, mit nicht verbrauchtem Wasserstoff und Reaktionsprodukten 222. Mit 238 ist die bipolare Stromführung gekennzeichnet, während das Bezugszeichen 210 die MEA, d. h. also die Membran-Elektroden-Einheit kennzeichnet. 217 ist der übliche Spannanker. Mit 225 ist die Gasbarriere in der Bipolarplatte 208 bezeichnet. Sie soll die unerwünschte Gasdiffusion von Gasen (H2, 02) durch die Bipolarplatten verhindern und damit unkontrollierte Reaktionen, wobei die Stromleitung behindert und die Wärmeleitfähigkeit reduziert wird.

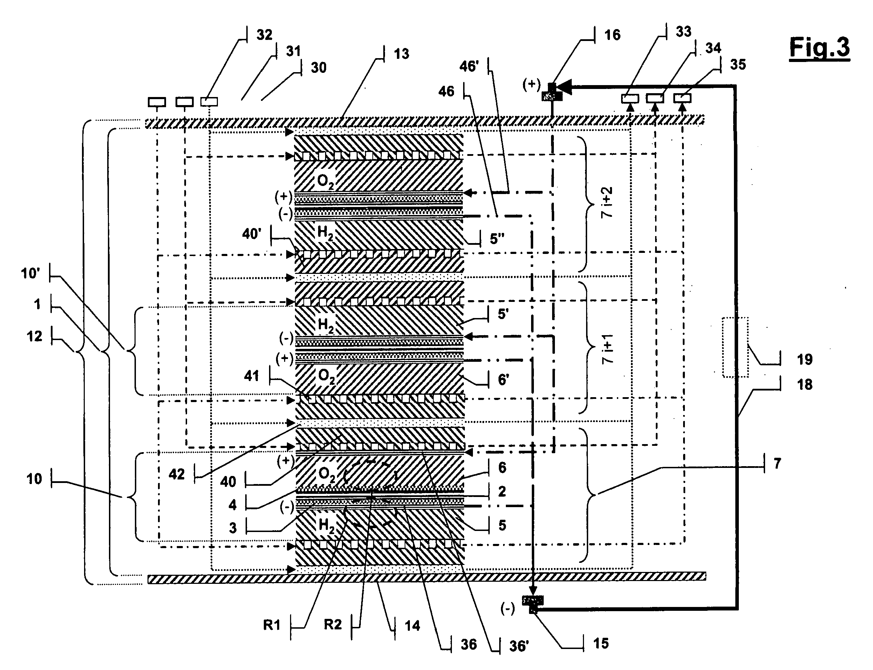

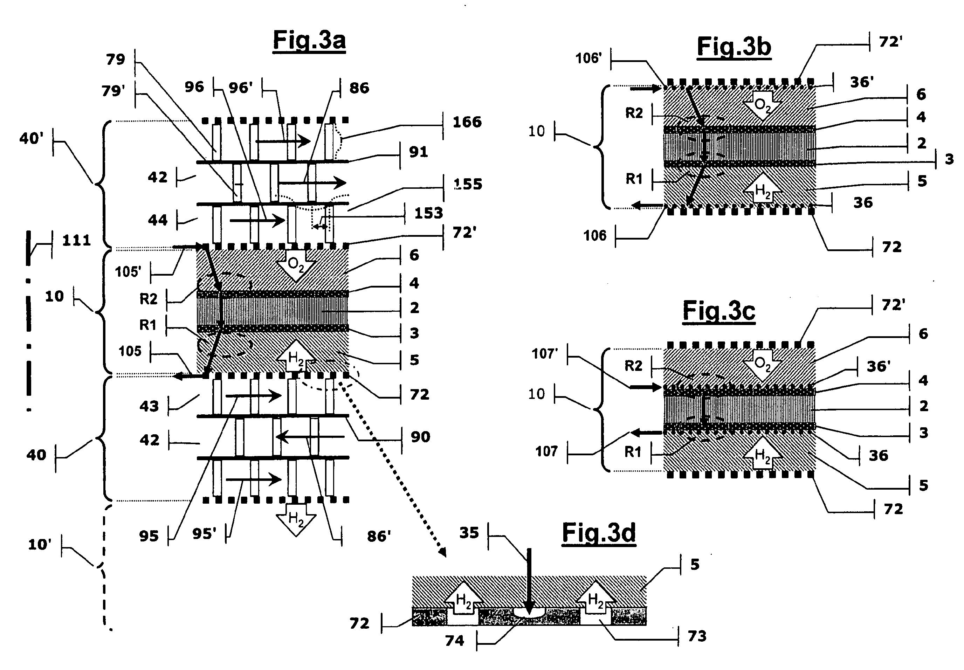

Figur 3 zeigt die Ausführung eines Brennstoffzellenmoduls 12, bestehend aus Einzelzellen 7, 7i+1, 7i+2, die alle ohne Bipolarplatten auskommen bzw. bei denen eine solche Ausführung gar nicht erst vorgesehen ist. Bei diesem Brennstoffzellenmodul 12 sind die Endplatten mit 13, 14 bezeichnet und die Stromabnehmer mit 15 und 16. Für jede Einzelzelle 7 ist eine Membran-Elektroden-Einheit 10 vorgesehen, jede mit einer Elektrodenanode 5 und einer Elektrodenkathode 6 bezeichnet. Jeder Elektrode 5, 6 ist ein Katalysator 3, 4 zugeordnet.

Zu erkennen ist, dass hier zwischen zwei Elektrodenanoden 5', 5" für den Wasserstoff ein Kühl-Medienmodul 40' angeordnet ist bzw. zwischen zwei Elektrodenkathoden 6, 6' für den Sauerstoff ein Kühl- und Medienmodul 40. Beispielhaft ist gezeigt, dass jeweils auf der Sauerstoffseite der Zellen 7 und 7i+1 das Kühl- und Medienmodul 40 angeordnet ist und für diese Position ausgelegt wurde und dass jeweils auf der Wasserstoffseite der Zellen 7i+1 und 7i+2 das Kühl- und Medienmodul 40' angeordnet ist und für diese Position ausgelegt wurde.

Die beiden (+)-Pole der benachbarten Zellen 7 und 7i+1 befinden sich beide auf der Seite des Kühl- und Medienmoduls 40. Beide Pole weisen das gleiche elektrische Potential auf, weshalb zwischen beiden kein Strom fließt. Falls Gasdiffusion aus den Gasverteilungskanälen über die Struktur des Kühl- und Medienmoduls 40 in den Kühlkanal 42 erfolgen sollte, dann betrifft dies nur ein Gas. Damit ist die Bildung unkontrolliert auftretender Zonen mit Elektrolyseeigenschaften ausgeschlossen. Da nur ein Gas in den Funktionsraum diffundiert ist auch eine spontane Gasreaktion ausgeschlossen.

Sinngemäß trifft dies auch auf der Wasserstoffseite für das Kühl- und Medienmodul 40' zwischen den Zellen 7i+1 und 7i+2 zu, deren (-)-Pole sich gegenüberliegen mit dazwischen angeordnetem Kühl- und Medienmodul 40'.

Mit Bezugszeichen 46 wird die Verschaltung der (-)Pole und mit 46' die Verschaltung der (+)Pole der Zellen 7, 7i+1 und 7i+2 bezeichnet. Diese Verschaltung sieht in Fig.3 beispielhaft eine parallele Verschaltung der Zellen untereinander vor. Durch einfaches Umpolen können die Pole der einzelnen Zellen auch in Serie verschaltet werden.

Die Elektrodenanode 5 ist nicht elektrisch leitend und weist beispielhaft eine membranseitige Oberfläche 36 auf, ausgeführt als stromleitende Schicht. Die Elektrodenkathode 6 ist dagegen elektrisch leitend und weist beispielhaft eine modulseitige Oberfläche 36' ausgeführt als stromleitende Schicht auf. Das Kühl- und Medienmodul 40 ist mit Gasverteilungskanälen 41 und Kühlkanälen 42 versehen wobei das Kühl- und Medienmodul 40 nicht als Stromleiter genutzt wird, sondern nur der Bereitstellung sekundärer Funktionsräume, den Gasverteilungskanälen 41 und Kühlkanälen 42 und der Stapelbildung, also der Bildung der geometrischen Struktur des Stapels dient. Statt des Begriffes Funktionsräume ist auch die Verwendung des Begriffes Funktionszonen denkbar, weil diese Funktionszonen sich zwischen den einzelnen Membran- und Elektrodeneinheiten 10 und 10' befinden, die vom Zellenrahmen 50 zum gegenüberliegenden Zellenrahmen führen.

Weiter ist in Figur 3 zu erkennen, dass für die Stromführung zwei unterschiedliche Ausführungen verwirklicht sind, indem die Stromführungsschicht 36 in der Ebene der Reaktionszone R1 und des Katalysators 3 angeordnet ist, wobei der Strom dort abgeführt wird, wo er entsteht. Die Elektrode 5 muss nicht stromleitend sein, sie dient nur noch der Gasdiffusion, Wärmeableitung und Ableitung der Reaktionsprodukte, vorzugsweise durch Konvektion. Weiter ist zu erkennen, dass die Stromführungsschicht 36' in der Ebene der Reaktionszone R2 und des Katalysators 4 angeordnet ist, wobei der Strom ebenfalls dort abgeführt wird, wo er entsteht. Die Elektrode 6 muss stromleitend sein, sie dient außerdem noch der Gasdiffusion, Wärmeableitung und Ableitung der Reaktionsprodukte, vorzugsweise durch Konvektion. Die stromleitenden Schichten können durch Beschichtung der jeweiligen Oberfläche erzeugt werden, zum Beispiel durch Beschichtung mit Nano-Materialien oder kohlenstoffgeträgerten Substraten.

Die in Figur 3 gezeigte Ausführung des Kühl- und Medienmoduls 40 weist Gasverteilungskanäle 42 an seiner Oberfläche auf, die der Zuleitung der Prozessgase und der Ableitung restlicher Prozessgase und der entstehenden Reaktionsprodukte dienen. Derart gestaltete Kühl- und Medienmodule 40 werden vorzugsweise aus Kunststoff hergestellt, indem zwei Modulhälften miteinander durch Kleben oder Schweißen verbunden werden.

Figur 3a zeigt eine besonders vorteilhafte Ausführung des Kühl- und Medienmoduls 40, 40'. Gezeigt wird ein Kühl- und Medienmodul 40 auf der Wasserstoffseite mit zwei Elektrodenabdeckungen 72 und zwei Kühlkanalblechen 90 sowie Abstandshaltern 79 und weiter ein Kühl- und Medienmodul 40' auf der Sauerstoffseite mit zwei Elektrodenabdeckungen 72' und zwei Kühlkanalblechen 91 sowie einteiligen Abstandshaltern 79 und beispielhaft einem zweiteiligen Abstandshalter 79'. Zwischen beiden Kühl- und Medienmodulen 40, 40' ist eine Membran-Elektroden-Einheit 10 angeordnet. Eine weitere mit 10' bezeichnete weitere Membran-Elektroden-Einheit ist unterhalb des Kühl- und Medienmoduls 40 angedeutet und zeigt, das diese Membran-Elektroden-Einheit 10' dem Kühl- und Medienmodul 40 ebenfalls mit seiner Wasserstoffseite zugewandt ist. Sinngemäß erfolgt der hier nicht weiter ausgeführte Stapelaufbau auf der Sauerstoffseite.

Mit 155 ist die elastische Verformung der Kühlkanalbleche in der Stapelrichtung bezeichnet, begünstigt durch die versetzte Anordnung 153 der Abstandshalter 79 und mit 155 die elastische Verformung der Abstandshalter 79 in der angedeuteten Stapelachse 166 prinzipiell gezeigt, wobei die Abstandshalter 79 beispielhaft vorgesehen und zwar versetzt angeordnet sind. Durch die elastische Biegung der Bauteile kann die gestapelte Struktur "atmen" und nachgeben, wenn thermisch bedingte Längenänderungen oder unterschiedliche Bauteilabmessungen aufgrund von Fertigungstoleranzen dies erfordern. Insbesondere aus dieser Struktur ergibt sich ein vorteilhaftes elastisches Verhalten des Innenstapels 109 sowohl bei der Montage, weil Fertigungstoleranzen der an der Stapelbildung beteiligten Bauteile einfach ausgeglichen werden und ebenso Wärmedehnungen während des Betriebs des Stapels. Darüber hinaus kann durch entsprechende Auslegung der Abstandshalterabmessungen in der Stapelachse eine gezielte mechanische Vorspannung des Gesamtstapels in der Stapelachse 111 erzielt werden, da ein Stapel mit dieser Struktur ähnlich einer Druckfeder auf axial wirkende äußere und innere Kräfte wirkt.

Aus Figur 3a ist ergänzend hierzu gezeigt, dass die mittig angeordnete MEA 10, also die Membran-Elektroden-Einheit beidseitig von je einem Kühl- und Medienmodul 40, 40' eingefasst ist. Mit 42 bzw. 43, 44 sind der Kühlkanal bzw. die Gaskanäle gekennzeichnet, wobei hier auch noch die Fließrichtung des Sauerstoffs 96, 96' bzw. des Wasserstoffs 95, 95' und die gegenläufige Fließrichtung des Kühlmediums 86 des ersten Kühlkreislaufs und des Kühlmediums 86' des zweiten Kühlkreislaufs angedeutet ist. Mit 72, 72' ist die Elektrodenabdeckung bezeichnet, und zwar auf beiden Seiten der Membran-Elektroden-Einheit 10. Mit 105, 105' sind die stromführende Ebene in der Elektrodenabdeckung anodenseitig und kathodenseitig durch entsprechende Bezugszeichen verdeutlicht.

Nach der Darstellung in Figur 3b ist die stromführende Ebene 106, 106' zwischen Elektrode 5, 6 und Elektrodenabdeckung 72 anoden- und kathodenseitig wiedergegeben, während nach Figur 3c diese stromführende Ebene 107, 107' im Membranbereich 2 zwischen Katalysator 3, 4 und Elektrode 5, 6 angeordnet ist. 36 und 36' zeigt die stromleitende Elektrodenoberfläche beispielsweise aus Nanomaterial.

Ergänzend wird in Figur 3d, einem vergrößert dargestellten Ausschnitt der Figur 3a, beispielhaft für die Wasserstoffseite gezeigt, wie der Wasserstoff H2 durch die Gasdurchlässe 73 in die Elektrode 5 eintritt und über die Gasableitungsrillen 74 Reaktionsprodukte und nicht verbrauchte Restgase, in diesem Fall Restwasserstoff, aus der Elektrode 5 austritt und über Ableitung auf der Wasserstoffseite 35 aus dem Stapel geführt wird. Deutlich wird dabei die getrennte Medienführung, indem das Prozessgas aus einem nur dafür vorgesehenen Kanal 43 auf der einen Seite der Elektrodenabdeckung 72 zugeführt wird und auf der anderen Seite der Elektrodenabdeckung 72 die Restgase und Reaktionsprodukte. Sinngemäß gilt dies auch für die Sauerstoffseite.

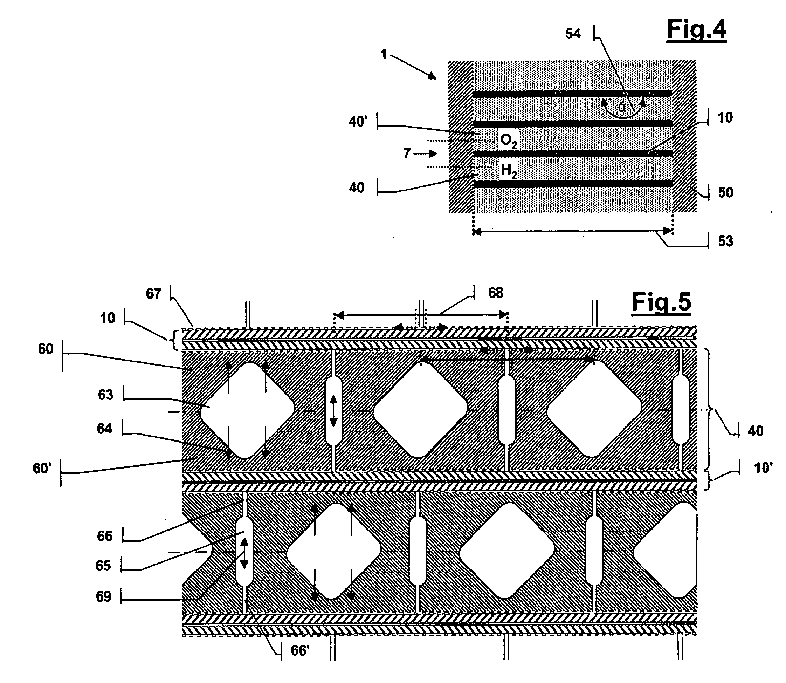

Figur 4 zeigt eine Brennstoffzelle, bzw. einen Zellenstapel 1, bei dem die Einzelzellen 7 übereinander liegend und vom Zellenrahmen 50 eingefasst in planarer Schichtung angeordnet sind. Mit 40, 40' sind die Kühl- und Medienrüodule in kompakter Ausführung bezeichnet, mit 10 die Membran-Elektroden-Einheit. 53 ist ein Rahmenfenster, in dem weitere solche Einzelzellen diesem Paket zugeordnet werden können. Mit 54 ist der Fächerwinkel gekennzeichnet, hier 180°, sodass die aktive Reaktionsfläche gleich der Rahmenfensterfläche ist.

In Figur 5 ist zwischen zwei Membran-Elektroden-Einheiten 10, 10' ein Kühl- und Medienmodul 40 angeordnet. Dieses Kühl- und Medienmodul 40 besteht aus zwei miteinander verbundenen Bauteilen 60, 60', hier aus Kunststoff, in denen sowohl ein Kühlkanal 63 wie auch ein Zuleitungskanal 65 für Produktgas vorgesehen sind. Mit dem Bezugszeichen 64 ist angedeutet, dass der Kühlkanal 63 bzw. das gesamte Kühl- und Medienmodul 40 elastisch ausgebildet ist bzw. eine elastische Dehnung zulässt, wenn entsprechender Gasdruck im Kühlkanal 63 herrscht bzw. entsprechend eingestellt ist. Durch diesen Kühlmediumdruck 64 wird das elastisch verformbare Kühl- und Medienmodul 40 bzw. die entsprechend verbundenen Bauteile 60, 60' so verformt, dass sich im Bereich der Membran-Elektroden-Einheit 10 eine vorteilhafte Gasverteilzone 67 bzw. partielle Gasverteilzone 68 erreichen lässt. Gezeigt ist, dass durch die Querkanäle 66, 66' des Zuleitungskanals 65 das Gas gleichmäßig in den Bereich der Membran-Elektroden-Einheit 10 gebracht werden kann. Mit 69 ist der Prozessgasdruck angedeutet, über den genau wie durch den Kühlkanal 63 und den dort herrschenden Kühlmediumdruck 64 die elastische Verformung erreichbar ist. Dadurch wird bewirkt, dass Fertigungstoleranzen der gestapelten Funktionselemente sowie Wärmedehnungen durch die elastische Dehnung so ausgeglichen werden, dass auf die Membran-Elektroden-Einheit 10, 10' eine optimale Flächenpressung wirkt. Näherungsweise beträgt die Flächenpressung Druckdifferenz pF = pKM - pPG mit pKM > pPG. Die Flächenpressung (Druckdifferenz) kann durch Veränderung des Kühlmediumdruckes 64 (pKM) bzw. des Prozessgasdruckes 69 (pPG) je nach Betriebspunkt der Brennstoffzelle angepasst werden. Die resultierende Flächenpressung ergibt sich aus der durch die Medien bewirkten Kräfte und denjenigen Kräften in der Stapelachse, die durch mechanische Vorspannung des Stapels aufgebracht werden. Die partielle Zuleitung bzw. Ableitung 66 bzw. die entsprechenden Querkanäle 66 in die partielle Gasverteilungszone 68 bewirkt, dass die Strömung der Medien in der Gasverteilzone 68 optimal gestaltet werden kann.

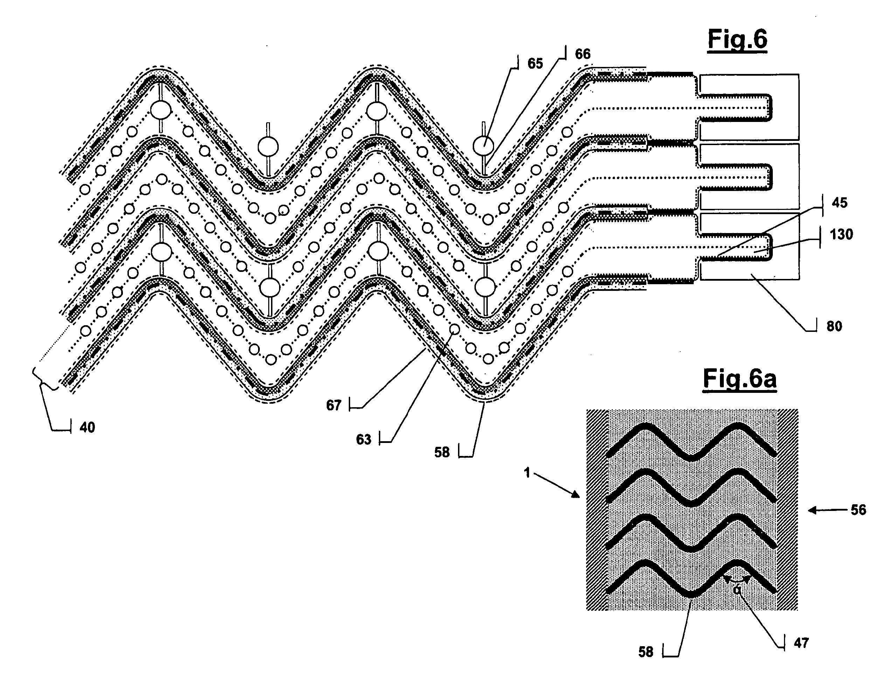

Figuren 6 und 6a zeigen einen Zellenstapel 1 mit Kühl- und Medienmodul 40 in gestapelter Fächeranordnung, vorzugsweise bestehend aus zwei Kunststoffbauteilen die miteinander verklebt oder verschweißt sind und Gasverteilungskanäle 41, Kühlkanälen 42. Dieser gestapelte Fächer, mit ineinander geschmiegten Fächerkuppen 58, ist mit 56 bezeichnet und insbesondere Figur 6a zu entnehmen, wo deutlich wird, dass ein Fächerwinkel 47 von ungefähr 90° erreicht ist. Das Kühl- und Medienmodul 40 wird auch hier nicht als Stromleiter genutzt, nur seine Oberfläche, die mit einer entsprechenden stromleitenden Schicht 45 ausgestattet ist. Über die Stromfahnen 130 und - hier beispielhaft gezeigt - Stecker 80 wird der Strom abgeleitet. Das Kühl- und Medienmodul 40 dient nur der Bereitstellung der sekundären Funktionsräume bzw. Funktionsebenen 41 (d.h. 43 und 44) und 42, als Träger für stromleitende Schichten (45) und der Stapelbildung, d. h. einer insgesamt auch stabilen Ausführung. Die Kühlkanäle 42 und Gasverteilungskanäle 41 bzw. Gaskanäle 43, 44 können auch um 90° gedreht, also nicht in der Fächerebene - wie gezeichnet - angeordnet werden. In Fig. 6 werden die Prozessgase beispielhaft in der Fächerachse geführt.

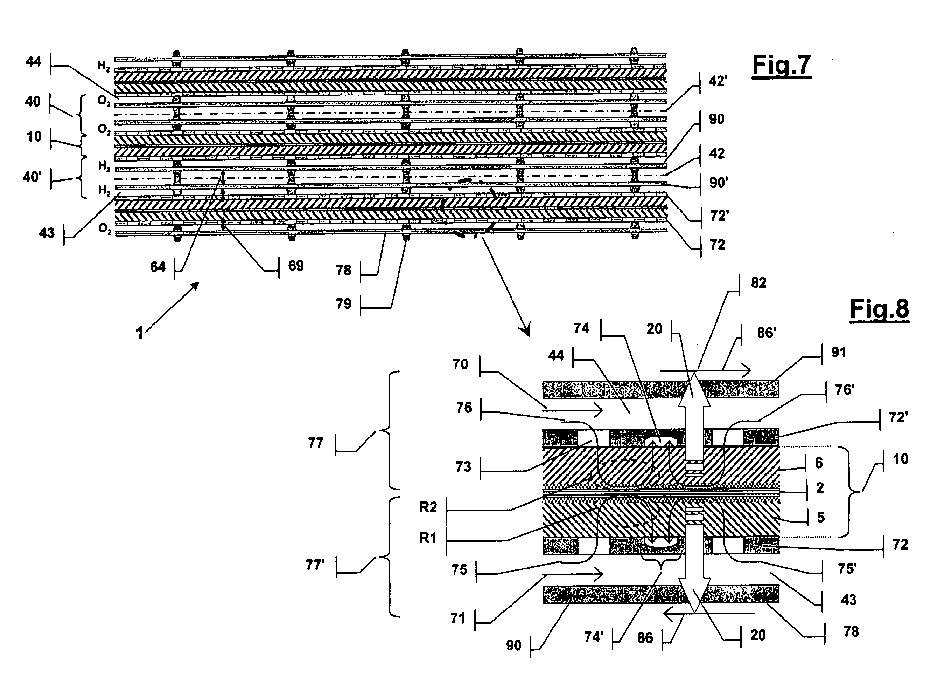

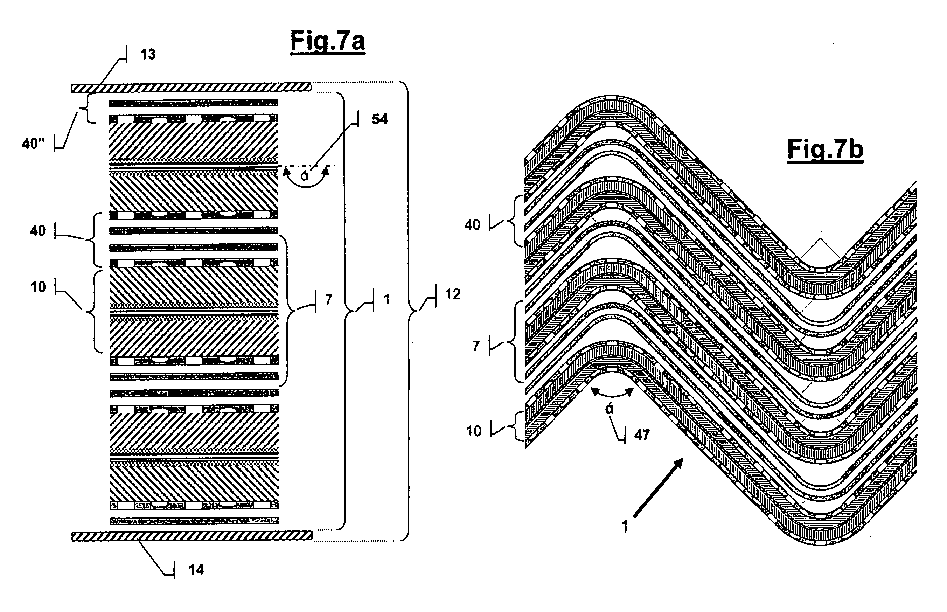

Figur 7 zeigt einen Zellenstapel 1 in planarer Ausführung, d. h. der Fächerwinkel a beträgt 180°. Die Kühl- und Medienmodule 40, 40' sind mehrteilig ausgebildet, d. h. sie bestehen jeweils aus 2 Elektrodenabdeckungen 72, 72' und 2 Bauteilen 90, 90' zur Ausbildung Kühlkanäle 42, 42', den Kühlkanalblechen sowie mehreren Abstandshaltern 79. Mit 10 ist die Membran-Elektroden-Einheit bezeichnet, die auf beiden Seiten von einem Kühl- und Medienmodul 40, 40' eingefasst ist. Die Wandungen oder die Platten, die die einzelnen Kühlkanäle 42, 42' bilden, bestehen aus Blechen, wobei diese Bleche über Abstandshalter 79 gegeneinander abgestützt sind. Ein Kühl- und Medienmodul 40, 40' besteht beispielsweise aus vier Blechen oder auch Folien aus Metall, wo außen die Elektrodenabdeckungen 72 und innen die Kühlkanalbleche 90 vorhanden sind. Diese Abstandshalter 79 sind sowohl auf der Kühlkanalseite 78 wie auch auf der Sauerstoff- und Wasserstoffseite angeordnet. Der im Kühlkanal 42, 42' herrschende Kühlmediumdruck ist auch hier mit 64 gekennzeichnet. Abstandshalter 79 können mit Untermaß gefertigt werden, dann wird die gesamte Flächenpressung, die zur Erreichung guter Wirkungsgrade im Bereich der Membran-Elektroden-Einheit 10 wirken muss, durch die Mediendrücke erzeugt. Vorteilhaft ist, dass auf die Membran-Elektroden-Einheit 10 gleichmäßig gepresst wird, auch bei ungleichmäßigen Bauteilmaßen oder ungleichmäßiger Wärmedehnungen im Betrieb des Brennstoffzellenmoduls 12. Abstandshalter 79 können mit Übermaß gefertigt werden; dann wird während der Stapelmontage eine definierte Vorspannung erzeugt. Die Abstandshalter 79 können auch gezielt so angeordnet und geformt werden, dass bis zu einem bestimmten Grad der Abstandshalter 79 elastisch auf ungleichmäßige Bauteilmaße oder ungleichmäßige Wärmedehnungen reagieren und nachgeben kann, beispielsweise durch Versetzen der Abstandshalter 79. Durch die elastische Biegung der einzelnen Bauteile kann die gestapelte Struktur "atmen" und nachgeben, wenn thermisch bedingt Längenänderungen oder unterschiedliche Bauteilabmessungen aufgrund von Fertigungstoleranzen dies erfordern. Sind die Abstandshalter 79 "kompakt" ausgebildet, dann ergibt sich eine starre Struktur in der Stapelachse.

Figur 7a zeigt ein Brennstoffzellenmodul 12 mit einem Fächerwinkel 54 von 180°; planare Bauteilstruktur, mit Kühl- und Mediummodul 40. Bei dieser Bauform entspricht die Projektion der aktiven Reaktionsfläche etwa ihrer Projektionsgröße auf das Rahmenfenster 53; sie ist etwa gleich dem Querschnitt des Innenstapels 109. Der Zellenstapel 1 wird mit je einer halben Kühl- und Mediummodul-Einheit 40" abgeschlossen und mit je einer Endplatte 13,14 abgedeckt.

Figur 7b zeigt den Ausschnitt eines Zellenstapels 1 mit einem Fächerwinkel 47, kleiner als 180°, in diesem Fall ca. 90°. Bei dieser Bauform ist die aktive Reaktionsfläche größer als ihre Projektion auf das Rahmenfenster 53; sie ist größer als der Querschnitt des Innenstapels 109. Die Einzelzellen 7 dieses Fächers, mit aneinander geschmiegten Fächerkuppen 58 sind gestapelt, mit den Membran-Elektroden-Einheiten 10 und Kühl- und Mediummodulen 40. Dichtungen sind hier nicht eingezeichnet. Ähnlich der Figur 6 können die Prozessgase in der Fächerachse geführt werden. Die Konstruktion bietet die Möglichkeit, die Prozessgase auch quer zur Fächerachse zu führen.

Figur 8 ist ein Ausschnitt aus Figur 7 vergrößert wiedergegeben, um zu verdeutlichen, wo in der Membran-Elektroden-Einheit 10 die Reaktionszonen R1 und R2 für Wasserstoff und Sauerstoff ausgebildet sind. Hier ist auch die Elektrolytmembran 2 positioniert und beidseitig wird diese Membran-Eletroden-Einheit 10 durch Elektrodenabdeckungen 72, 72' der Zuleitung für Sauerstoff 70 bzw. Wasserstoff 71 begrenzt. In den Elektrodenabdeckungen 72, 72' sind Gasdurchlässe 73 und Gasableitungsrillen 74 vorgesehen. Über die Gasdurchlässe 73 strömt das jeweilige Prozessgas in den Bereich der Membran-Elektroden-Einheit 10, um dann bezüglich der mit 74' bezeichneten Restgase und Reaktionsprodukte über die Gasableitung 74 aus dem Funktionsbereich zu entfernen. Dies gilt sinngemäß für die Sauerstoff- und Wasserstoffseite, auch im Folgenden. Verdeutlicht ist, dass auch jeweils nur ein Teilstrom 75 des Wasserstoffes in den Bereich der Membran-Elektroden-Einheit 10 gelangt, während weitere Teilströme durch die weiteren Gasdurchlässe 73 an die Membran-Elektroden-Einheit 10 herangeführt werden. Deutlich wird hier, dass vor und nach den Elektrodenabdeckungen 72, 72' klar getrennte Gasströmungen mit der Konstruktion realisiert werden. Durch die jeweiligen Zuleitungen bzw. Gaskanäle 70, 71 strömt das Prozessgas unvermischt zu und von dort weiter durch die Gasdurchlässe 73 zu den Elektroden 5, 6. In den Elektroden 5, 6 diffundiert das Gas bis zur jeweiligen Reaktionszone R1, R2. Von dort strömen nicht verbrauchtes Restgas und Reaktionsprodukte, z. B. Wasser oder Wasserdampf bis in die Ableitungen bzw. Gasableitungsrillen 74, 74', vorzugsweise durch Konvektion. Der Druck in den Gasableitungsrillen 74, 74' ist geringer als in den porösen Elektroden 5, 6, wodurch die Ableitung von Gasen und Reaktionsprodukten begünstigt wird. Gezeigt wird außerdem die Auskopplung der Prozesswärme 20 aus den Reaktionszonen R1, R2 über die Elektroden 5, 6 und die Gaskanäle 43, 44 bis zum Kühlmedium 82 und den Kühlkanälen 63, 63'. Dabei werden die in den Gaskanälen 70 (02) und 71 (H2) zuströmenden Prozessgase aufgewärmt, da mit "kalten" Prozessgasen keine guten Zellenwirkungsgrade erzielt werden können. Gezeigt wird auch die gegenläufige Strömung 86, 86' in den Kühlkanälen 63, 63', was bedeutet, dass sich hier ein gleichmäßiges Temperaturprofil über den Zellenquerschnitt sicher erreichen lässt. Die einzelnen Bauteile des Kühl- und Medienmoduls 90, 90', 72, 72', 79 werden vorzugsweise aus Edelstahlblech gefertigt. Konstruktionen unter Verwendung entsprechend dünnwandiger Kunststoffbauteile sind erfindungsgemäß.

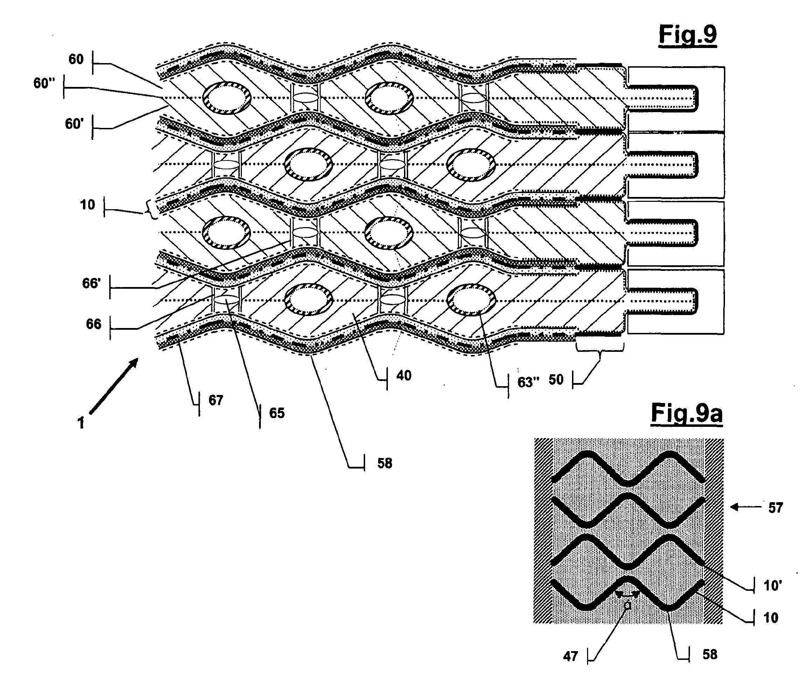

Figur 9 zeigt eine Ausführung eines Zellenstapels 1, insbesondere des Kühl- und Medienmoduls 40, bei dem eine Konstruktion aus zwei Kunststoffteilen 60, 60' verwirklicht ist, die einen parallelen Fächer 57 mit einem Fächerwinkel 47 von < 180° ergibt. Erkennbar ist hier auch die seitliche Einfassung der Membran-Elektroden-Einheit 10 durch den noch weiter zu erläuternden Zellenrahmen 50. Bei dieser Darstellung besteht das Kühl- und Mediummodul 40 aus zwei elastischen Kunststoffteilen, die in der Fügeebene 60" miteinander verklebt oder verschweißt wurden. Gezeigt wird die Gestaltung und Lage der Medienführung mit einem Gaskanal 43 für Wasserstoff, einem Gaskanal 65 für Sauerstoff, Querkanälen 66, 66' für die Weiterleitung von Prozessgasen aus den Gaskanälen 65 bis zu den Membran-Elektroden-Einheiten 10, dem Kühlkanal 63", hier beispielhaft gezeigt mit einer zusätzlich integrierten rohrähnlichen Hülse und die Stromleitung hier beispielhaft mit Steckern. Die Prozessgase werden in der Fächerachse geführt.

Figur 9a verdeutlicht den prinzipiellen Aufbau eines parallelen Fächers 57, wobei hier die einzelnen Membran-Elektroden-Einheiten 10, 10' jeweils so geführt sind, dass sich der beschriebene parallele Fächer ergibt, indem die Fächerkuppen 58 aufeinander stehen.

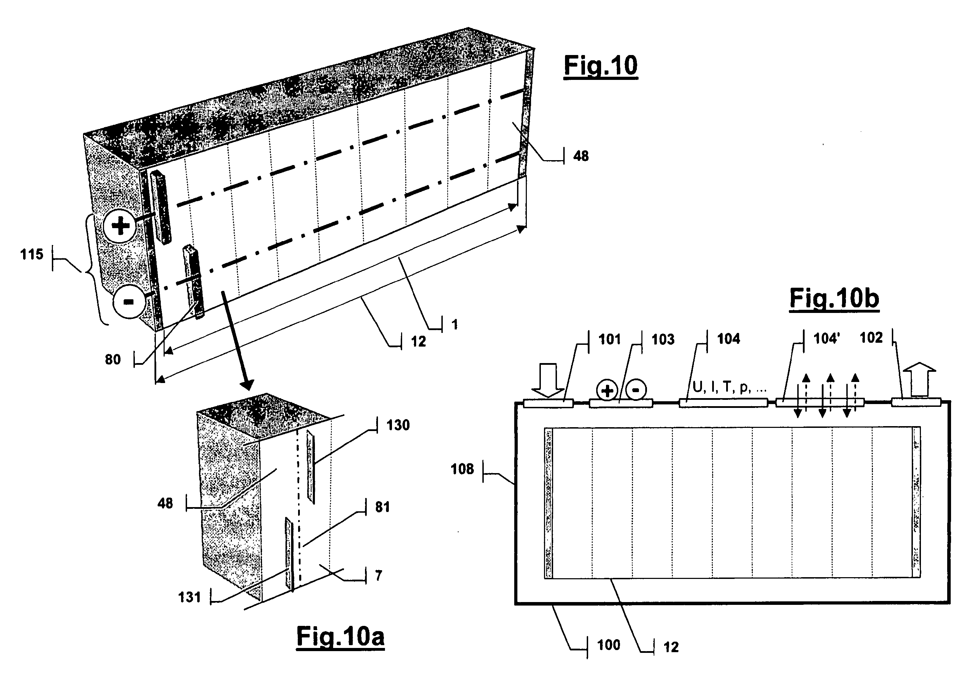

Nach Figur 10 besteht das Brennstoffzellenmodul 12 aus einer Vielzahl von Einzelzellen 7, die zu einem Zellenstapel 1 geformt sind. Bei diesem Zellenstapel 1 sind die hier nicht mehr erkennbaren, aber in den Figuren 3 und 5 gezeigten Stromführungen 45, 46 über die Außenwand 48 hinaus geführt, um dort Stecker 80 anbringen zu können, über die eine Verschaltung in gewünschter Form möglich ist. Figur 10 zeigt eine perspektivische, vereinfachte Ansicht eines Brennstoffzellenmoduls 12, wobei hier beispielhaft die parallele Verschaltung von Zellen bzw. Teilstapeln mit vorstehenden Stromfahnen bzw. Steckern gezeigt ist.

Figur 10a zeigt eine vereinfachte Ansicht mit den vorstehenden Stromfahnen 130, 131, die Teil der Elektrodenabdeckungen sind und zwischen diesen angedeutet, die Ebene 81, in der sich die Membran-Elektroden-Einheit der betreffenden Zelle befindet.

Figur 10b zeigt wiederum einen vereinfachten Schnitt durch ein gesamtes Stapelgehäuse 100, wobei hier die Leistungspole 115 nicht erkennbar sind. Gezeigt werden die verschiedenen Schnittstellen für Medien-, Leistungspole und die Steuerung und Regelung. Es ist die Belüftung des Stapelgehäuses 100 angedeutet. Das Brennstoffzellenmodul 1 kann an der Außenwand 108 bis zu einer Temperatur von 200°C aufgeheizt werden. Das belüftete Stapelgehäuse 100 hat an seiner Außenwand 108 Raumtemperatur, bewirkt durch die Belüftung, wovon die Zuluft 101 und die Abluft 102 gekennzeichnet sind. Die Leistungspole am Stapelgehäuse 100 sind mit 103 bezeichnet, die Schnittstelle-Steuerung-Regelung mit 104, die Medienschnittstelle mit 104' und die Außenwand wie schon bezeichnet mit 108. Über die Schnittstelle 104 werden alle zur Steuerung und Regelung des Brennstoffzellenmoduls erforderlichen elektrischen, hydraulischen und pneumatischen Verbindungsleitungen und -elemente geführt. Über die Schnittstelle 104' werden alle zum Betrieb des Brennstoffzellenmoduls erforderlichen Verbindungsleitungen und -elemente geführt, insbesondere Zuleitungen für Prozessgase und Kühlmedien und Ableitungen für nicht verbrauchte Prozessgase und Reaktionsprodukte.

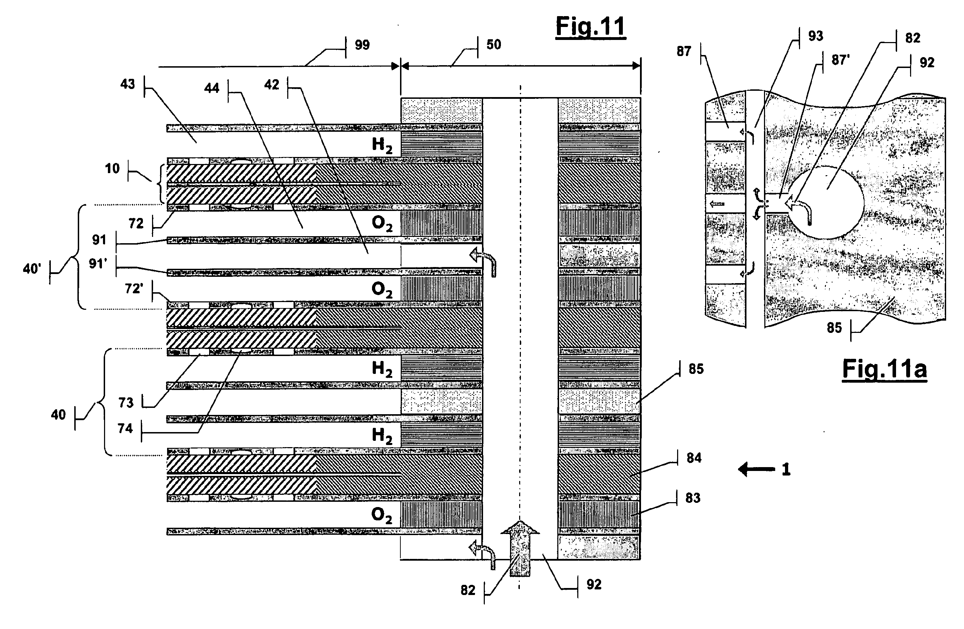

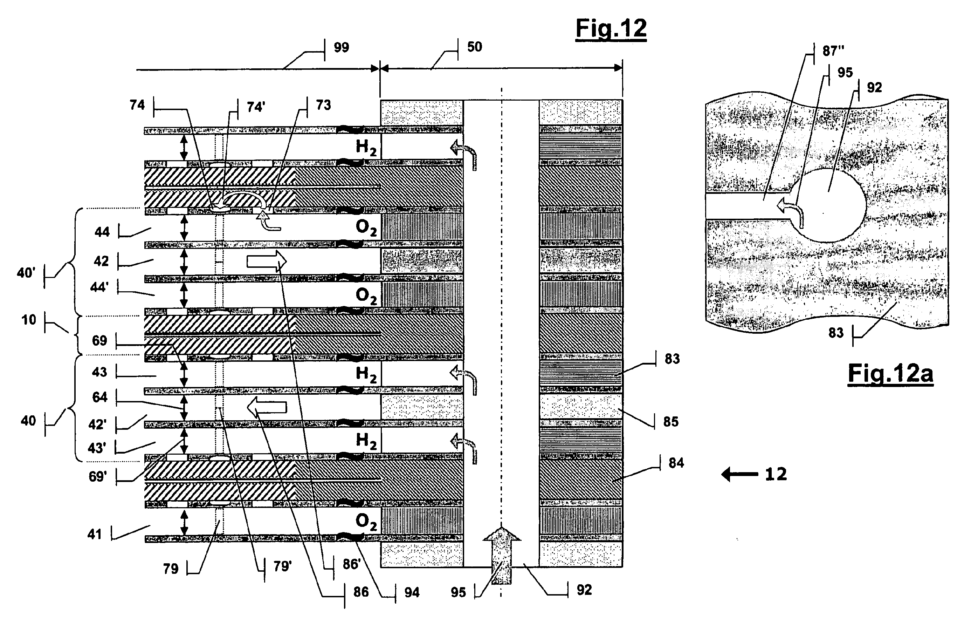

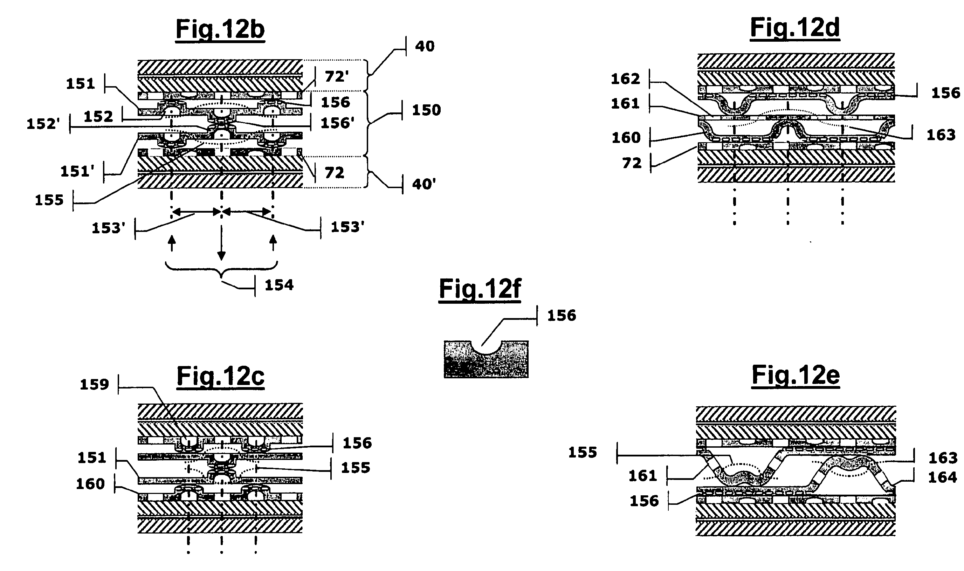

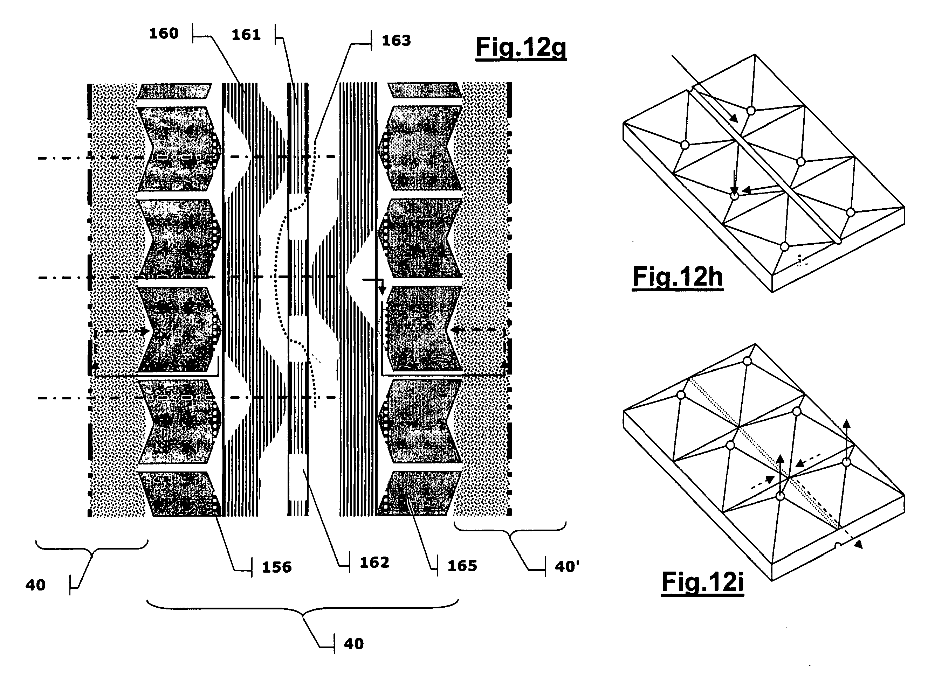

Die Figuren 11, 11 a und auch die Figuren 12 und 12a zeigen vereinfachte Schnitte durch einen Zellenstapel. Mit 40, 40' ist das Kühl- und Medienmodul in Kompaktausführung bezeichnet, wobei hier erkennbar ist, dass die einzelnen Funktionsräume bzw. Funktionsebenen des Kühl- und Medienmoduls 40, 41 über Versorgungskanäle 92 mit dem jeweiligen Medium versorgt werden.

Bei Figur 11 wird das Kühlmedium 82 durch den Versorgungskanal 92 hindurch geleitet, der durch Bohrungen entsteht, die sowohl in den Dichtungen 83, 84, 85 wie auch in den dazwischen angeordneten Blechen 90, 91 ausgebildet sind. Dieser Versorgungskanal 92 weist in den entsprechenden "Arbeitsebenen" Querkanäle 93 auf, über die das Kühlmedium 82 oder nach Figur 12 auch der Wasserstoff 95 oder auch Sauerstoff in die jeweilige Ebene bzw. in den Kühlkanal 42 bzw. Gasverteilungskanal 41 hineingeleitet wird. Die gezeigten Dichtungen 83, 84, 85 und die entsprechenden Abschnitte der Bleche 90, 91 ergeben den weiter vorne schon erwähnten Zellenrahmen 50, der mehrere, vorzugsweise mindestens sechs der geschilderten Versorgungskanäle 92 aufweist, um einmal den Wasserstoff, den Sauerstoff und zum anderen das Kühlmedium zu- und wieder abzuführen.

Figur 11 a zeigt den Versorgungskanal 92 und den davon abgehenden Querkanal 93, der hier in der Dichtung 83 ausgebildet ist. Es versteht sich, dass die entsprechenden Bohrungen zu den einzelnen Dichtungen 83, 84, 85 und auch 83' deckungsgleich ausgebildet sind und natürlich auch in den Blechen 90, 91. Mit 99 (Figur 11) ist die projizierte Reaktionsfläche bezeichnet, die beispielsweise 150 x 150 mm groß ist.

Figur 12, 12a und 12b verdeutlichen den Zufluss von Wasserstoff 95. Gezeigt wird der Zufluss des Wasserstoffes 95 aus dem Kanal 92 über Querkanäle 93 und den Gaskanal bis zur Reaktionszone. Hierzu sind die Gasdurchlässe 73 und die Gasableitungsrillen 74 vorgesehen. Mit 79, 79' sind die Abstandshalter bezeichnet, die die einzelnen Bleche 91, 90 auseinander halten. Die Wellen, die mit 94 bezeichnet sind, zeigen die Elastizitätsstruktur, die durch die Bleche 91, 90 und die Abstandshalter 79 erreicht wird. Es kann ein strukturiertes Blech verwendet werden, dessen Struktur die Axialelastizität des Stapels noch vergrößert, beispielsweise in Form von Rillen.

Figur 12a zeigt wieder einen Schnitt durch eine Gaskanaldichtung 83' mit dem Versorgungskanal 92, dem Versorgungskanalanschluss 87", dem Querkanal 93 und dem Pfeil für den Wasserstoff 95.

In Vergrößerung ist in Figur 12b verdeutlicht, wie die unterschiedlichen Abstandshalter 79 bzw. auch 79' ausgebildet sein können. Es sind verschiedene Abstandshalterkonzepte denkbar, beispielsweise starre, flexible, in der Elektrodenabdeckung als Höcker oder eingeprägte Rillen wiedergegebene Abstandshalter

In Vergrößerung ist in Figur 12b verdeutlicht, wie die unterschiedlichen Abstandshalter 79 bzw. auch 79' ausgebildet sein können. Es sind verschiedene Abstandshalterkonzepte denkbar, beispielsweise starre, flexible, in der Elektrodenabdeckung als Höcker oder eingeprägte Rillen wiedergegebene Abstandshalter 79, 79'. Das Bezugszeichen 87 bei Figur 11a ist dort eingesetzt, um zu verdeutlichen, dass über Dichtungen oder entsprechende Bleche eine ganz feine Verteilung der Medien durch weitere Verbindungskanäle denkbar ist.

Figur 12b-e zeigen verschiedene Varianten, wie die Elastizität im Innenstapel definiert erzeugt werden kann, bis zur Vorspannung, indem der Innenstapel wie eine Druckfeder wirkt.

Figur 12f zeigt einen Schnitt durch die Ausgleichs- und Verteilrille 156, die dann erforderlich ist, wenn Abstandshalter 79 als längliche Aufwölbungen ausgeformt sind. Zwischen den einzelnen Kanalbereichen kann sich das Gas dann frei bewegen.

Figur 12g zeigt einen KMM-Aufbau mit Elektrodenabdeckungen aus Wabenblech 165. Auch hier sind Ausgleichs- und Verteilrillen 156 erforderlich. Mit 160 ist das Kühlkanalblech mit 161 ein Stützblech, 162 die Druckausgleichsöffnung und 163 die Biegelinie des Stützbleches bezeichnet.

Figur 12h zeigt die Elektrodenabdeckung 165 von der Gaskanalseite und wie das Gas durch die Gasdurchlässe in die Elektrode einströmt. Die Elektrodenabdeckung 165 dringt durch den Druck in der Stapelachse in die Elektrode 5, 6 ein und lässt in der "Talsohle" eine Rinne frei, die zum abströmen der Restgase und Reaktionsprodukt erforderlich ist (s. auch Gasableitungsrillen).

Figur 12i zeigt die Elektrodenabdeckung 165 von der Elektrodenseite. Zu sehen ist, dass aus den Gasdurchlässen ausströmende Gas und die zurückströmenden Restgas und Reaktionsprodukte.

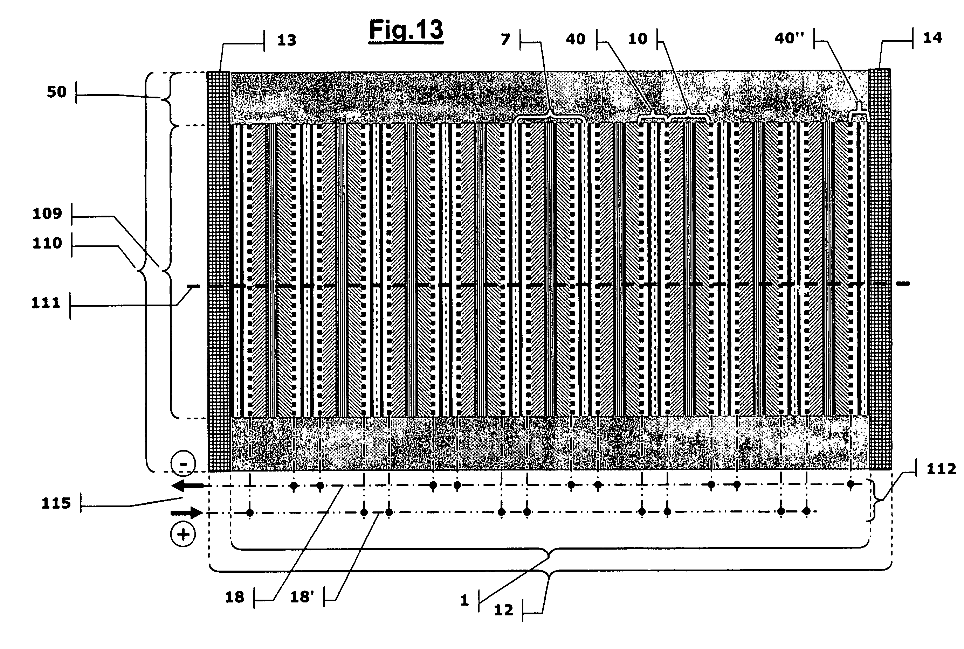

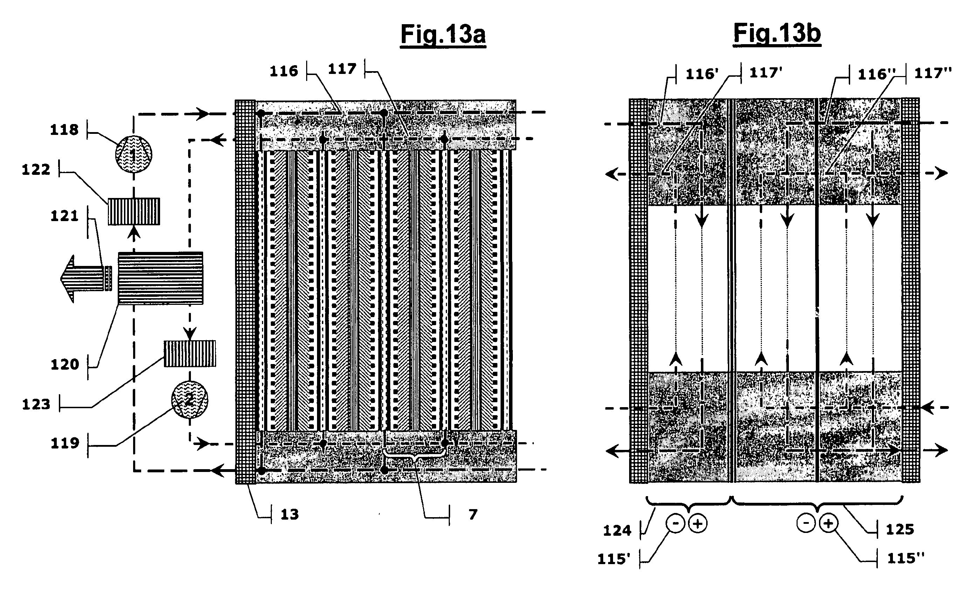

Figur 13 gibt einen vereinfachten Schnitt durch ein Brennstoffzellenmodul 1 wieder. Gezeigt ist der Zellenstapel 12 mit den Endplatten 13, 14, wo beispielhaft die parallele Zellenverschaltung 112 gezeigt ist. Im Innenstapel 109 sind aufgrund der Fertigungstoleranzen der beteiligten Bauteile insbesondere der Membran-Elektroden-Einheit 10 und der unterschiedlichen thermischen Dehnungen nicht in jedem Fall in der gewünschten idealen Stapelachse bzw. Stapelorientierung 111 zu montieren. Mit 110 ist der Außenstapel bezeichnet. In Folge der erwähnten Probleme wird häufig versucht, den entstehenden Versatz durch mechanisches Verspannen zurückzustellen. Die Folgen sind Kantenquetschungen, Undichtigkeiten, Gasdiffusion und spontane, nicht kontrollierbare Nebenreaktionen der Prozessgase, was durch die erfindungsgemäße Ausbildung des Brennstoffzellenmoduls 1 nicht der Fall ist. 112 ist die parallele Zellenverschaltung, 115 sind die Leistungspole.

Figur 13a zeigt, dass mit zwei Kühlkreisläufen 116, 117 gearbeitet werden soll, jeweils für die Sauerstoffseite und die Wasserstoffseite. Bei jedem folgenden Kühl- und Mediummodul 40 wird die Strömungsrichtung im Kühlkanal gewechselt. Die gegenläufigen Kühlkreisläufe 116, 117 werden vorzugsweise über einen Wärmetauscher 120 geführt, bevor sie über den Vorratsbehälter 128 und die Aufbereitung sowie den Verdichter 118 in den Kreislauf eingegeben werden. Umgekehrt wird das Kühlmedium über den Wärmetauscher 120 einem Vorratsbehälter 123 und dem Verdichter 119 in den anderen Kreislauf gegeben, wobei die Abwärme 121 aus dem Wärmetauscher 120 abgeführt wird. Im Wärmetauscher 120 wird die Prozesswärme, die aus der Brennstoffzelle bzw. dem Brennstoffzellenmodul 1 ausgekoppelt wurde und über das Kühlmedium zum Wärmetauscher 120 transportiert wurde, gezielt ausgenutzt und ggf. abgeführt. Die Wärme kann nämlich auch genutzt werden, z. B. zum Vorwärmen des Prozessgases oder bei stationären Anlagen zur Auskopplung von Nutzwärme zum Heizen. Außerdem befindet sich im Rücklauf geschlossener Systeme nach dem Wärmetauscher 120 ein Vorratsbehälter 122, 123 mit optionaler Medienaufbereitung.

Figur 13b zeigt die Anordnung von einem aus mehreren Teilstapeln 124 bestehenden Stapel 125. Auch hier sind die Zellen in Reihe geschaltet und mit zwei gegenläufigen Kühlkreisläufen 116, 117 ausgerüstet. Der Betrieb der einzelnen Teilstapel 124 mit eigenem Kühlkreislauf und eigenen Leistungspolen, Steuerung und Regelung ist für den Betrieb des Brennstoffzellenmoduls insgesamt vorteilhaft. Das Aufheizen eines einzelnen Teilstapels 124 erfordert einen deutlich geringeren Aufwand an externer Energie, z. B. aus einer Batterie, als das Aufheizen eines ganzen Stapels 125. Nachdem die Betriebstemperatur für den Teilstapel 124 erreicht wurde, kann der Teilstapel gestartet werden. Die Energie des Teilstapels 124 wird zunächst genutzt, um die übrigen kalten Teilstapel auf Starttemperatur zu bringen. Der Einzel-Teilstapel wird also als Start-Teilstapel benutzt, was erhebliche Vorteile bringt. Weiter kann ein Teilstapel 124 auch als redundantes Notstromsystem genutzt werden, z. B. um die Steuer- und Regelfunktionen aufrecht zu erhalten oder Ruheenergie bereitzustellen.

Vorzugsweise sind die einzelnen Teilstapel 124, 125 parallel geschaltet und mit zwei gegenläufigen Kühlkreisläufen ausgerüstet, sind die Kühlkreisläufe des Einzelstapels und des Teilstapels 125 mit mehreren Teilstapeln 124 getrennt, so lange der Start-Stapel aufgeheizt wird. Danach werden die Medienströme gekoppelt. Das gleiche gilt für die elektrische Verschaltung.

Es wird nur eine kleine Batteriekapazität für den Start benötigt. Die kleine Einheit liefert dann die Energie, um den Reststapel auf Betriebstemperatur zu bringen.

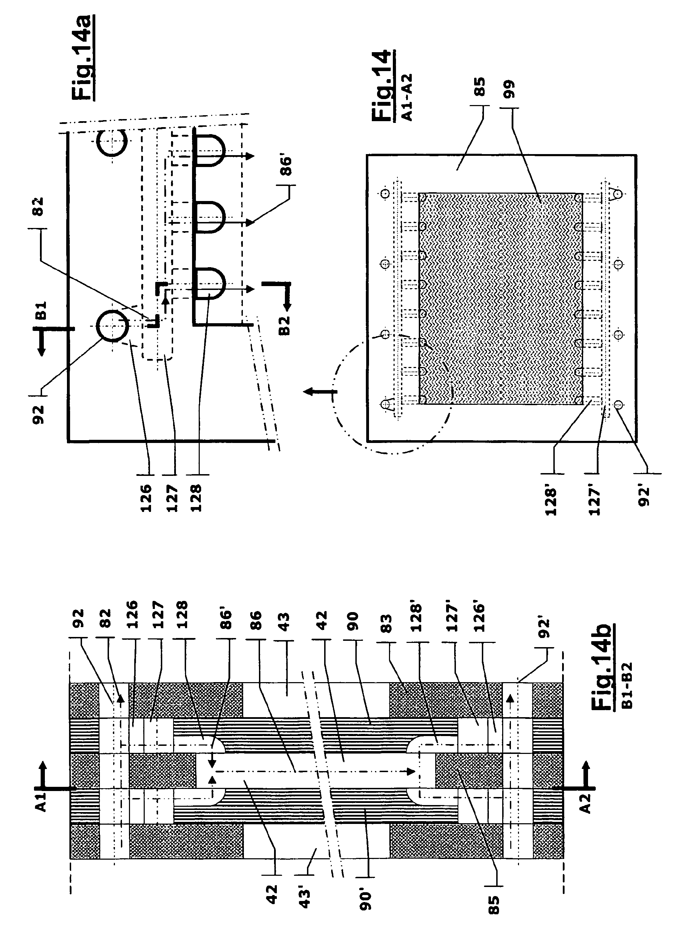

Bei der in Figur 14 gezeigten Variante ist wesentlich, dass die Quer- und Verteilkanäle 92', 127', 128, 128' jeweils in Einzelstrukturbleche eingearbeitet sind, während die Dichtungen 83, 84, 85 nur Öffnungen für die Längskanäle aufweisen. Gezeigt werden die Kanäle 92 für die Verteilung des Kühlmediums 82. Dahinter wird ein Kühlkanalblech sichtbar und ein Teil der in das Kühlkanalblech beispielhaft eingearbeiteten Verteilkanäle 128, 128'.

Figur 14a ist eine Ausschnittvergrößerung, wobei gezeigt wird, wie im Detail das Kühlmedium aus dem Längskanal bzw. Versorgungskanal 92 über Verbindungskanal 126 und Querkanal 127 sowie Verteilkanäle 128 strömt. Sinngemäß gilt dies für die Zuleitung und die Ableitung des Kühlmediums.

Figur 14b gibt ein Kühlkanaldetail wieder. Vorzugsweise beide Kühlkanalbleche sind mit Verbindungskanälen 126, Querkanälen 127 und Verteilkanälen 128 ausgestattet. Vorteilhaft ist, dass die inneren Widerstände dadurch reduziert werden können. Gezeigt werden Kanäle, die ähnlich einem Durchgangsloch gefertigt sind (offen) und andere die nicht offen (geschlossen) und in das Blech eingearbeitet sind ohne es vollständig zu öffnen.

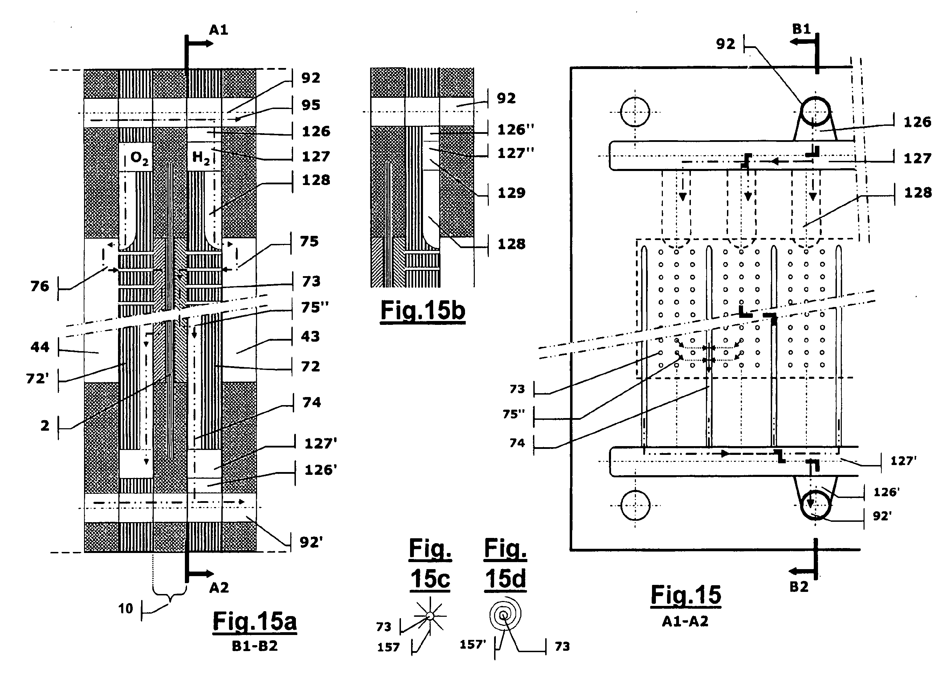

Figur 15 zeigt eine Ansicht auf Membran-Elektrodenseite der Elektrodenabdeckung 72, hier mit den Gasdurchlässen 73. Das aus den Gasdurchlässen 73, 73' ausströmende Gas und die Gasströmung in die Gasableitungsrille 74 werden hier deutlich. Kanäle zur Verteilung des Gases sind mit 127, 128 bezeichnet. Außerdem ist zu erkennen, dass eine Vielzahl der schon genannten Gasdurchlässe 73 über die Elektrodenabdeckung verteilt vorgesehen sind, sodass eine sehr gleichmäßige Verteilung möglich ist. Dahinter ist ein Kühlkanalblech sichtbar und ein Teil der in das Kühlkanalblech beispielhaft eingearbeiteten Verteilkanäle 128, 128'.

Figur 15a zeigt, dass vorzugsweise in beide Elektrodenabdeckungen 72 (Sauerstoff- und Wasserstoffseite) mit Verbindungskanälen 126, Querkanälen 127, Verteilkanälen 128 und Gasableitungsrillen 74 eingearbeitet sind. Diese Kanäle sind hier als offene Kanäle 126, 127 gezeichnet, während 128 als geschlossener Kanal dargestellt ist. Figur 15b zeigt die geschlossene Kanalstruktur 129. Alle Kanäle 126", 127" und Rillen 128 sind geschlossen, nur der Versorgungskanal 92 ist offen. Die Figuren 15 c und d zeigen zusätzliche Gasverteilungen 157,157' auf der Elektrodenseite den Elektrodenabdeckung, die der feinsten Gasverteilung dienen.

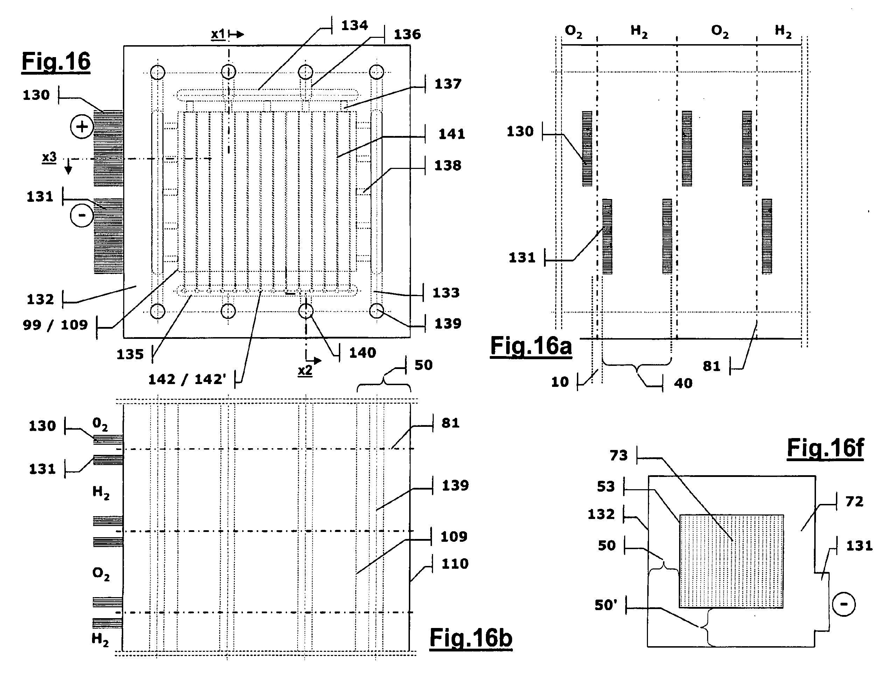

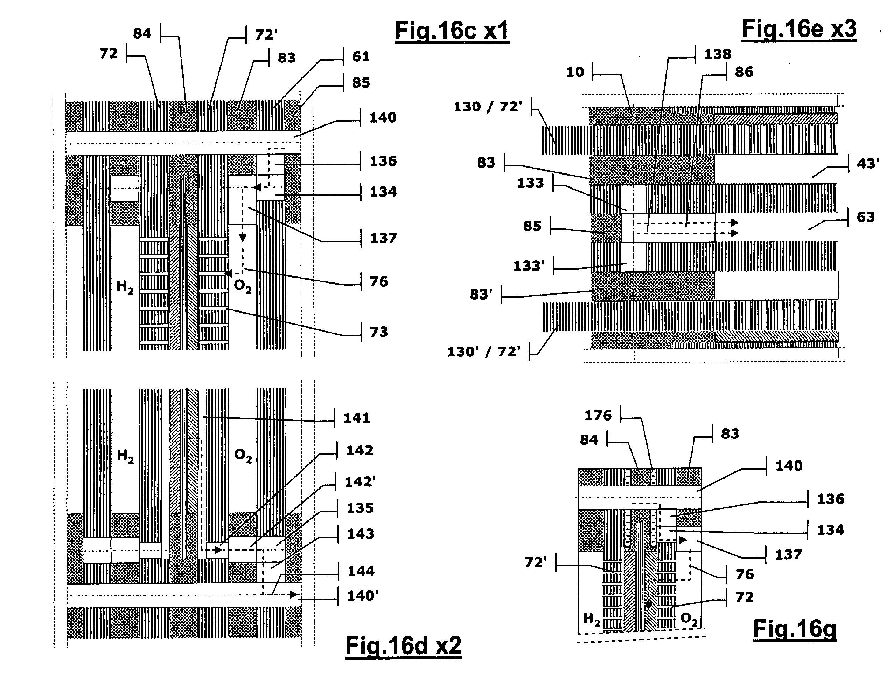

Figur 16 zeigt eine Ansicht eines Brennstoffzellenmoduls 1 auf eine Endplatte 13 oder 14 in Stapelachse 111. Wichtig ist hier die vertikale Anordnung der Querkanäle 133 für das Kühlmedium. 130, 131 sind die Stromfahnen und mit 132 ist der Stapelquerschnitt gekennzeichnet. Mit 109 ist der Innenstapel gekennzeichnet, mit 110 der Außenstapel.

Das Kühlmedium strömt aus dem Versorgungskanal 139 in den Querkanal 133 und von dort über den Verbindungskanal 138 ins System, während die Querkanäle 134, 135 für den Eintritt für das Prozessgas und den Austritt für das Prozessgas bezeichnen, die über den Verbindungskanal 136 und die Verteilkanäle 137 angeschlossen sind. Mit 140 und 140' sind Versorgungskanal und Entsorgungskanal für Prozessgas bezeichnet sowie mit 141 die Gasableitungsrillen. Figur 16a und Figur 16b zeigen eine Seitenansicht und eine Draufsicht auf das Brennstoffzellenmodul 1 im Teilbereich, während Figur 16c x1 den Schnitt durch die Sauerstoffzuleitung wiedergibt. Kanäle und Durchlässe sind offene Schlitze oder Bohrungen, wobei die Wasserstoffzuleitung sinngemäß aufgebaut ist, allerdings mit separaten Versorgungskanälen 140. Es wird im Schnitt deutlich, dass der Wasserstoff-Querkanal 134 nicht mit dem Längskanal für Sauerstoff (02) verbunden ist.

Figur 16f Es wird eine Elektrodenabdeckung 72 mit einer Stromfahne 131 gezeigt.

Figur 16d x2 ergibt einen Schnitt durch die Sauerstoffableitung wieder, wobei hier die Gasableitungsrille 141 als eine in das Blech eingearbeitete Rille wiedergegeben ist. Kanäle und Durchlässe sind offene Schlitze oder Bohrungen. Sinngemäß ist die Wasserstoffzuleitung aufgebaut. Auch hier ist zu sehen, dass der Wasserstoff-Querkanal nicht mit dem Längskanal für Sauerstoff verbunden ist. Bezugszeichen 142, 142' ist die Verbindungsöffnung durch die Elektrodenabdeckung 72. 143 ist der Ableitkanal und 144 ein Teilstrom bezüglich des Entsorgungskanals 140' für das Prozessgas, hier den Sauerstoff.

Figur 16e x3 ist ein Schnitt durch die Zuleitung für das Kühlmedium. Kanäle und Durchlässe sind auch wieder offene Schlitze und Bohrungen. Im Schnitt zu sehen ist, dass der Kühlkanal 138 durch zwei Querkanäle 133, 133' angeströmt wird. Sinngemäß ist der Abfluss aufgebaut, nur spiegelbildlich.

Figur 16g zeigt eine weitere Variante des Schnittes 16d x2: hier sind zwischen Elektrodenabdeckung 72 und MEA-Dichtung 84 Schutzbleche 176 in den Zellenrahmen eingefügt, hauptsächlich um strömendes Gas von der MEA-Dichtung 84 fernzuhalten, wenn die Konstruktion einen Durchbruch oder Kanal in der Elektrodenabdeckung 72 an dieser Stelle erfordert,

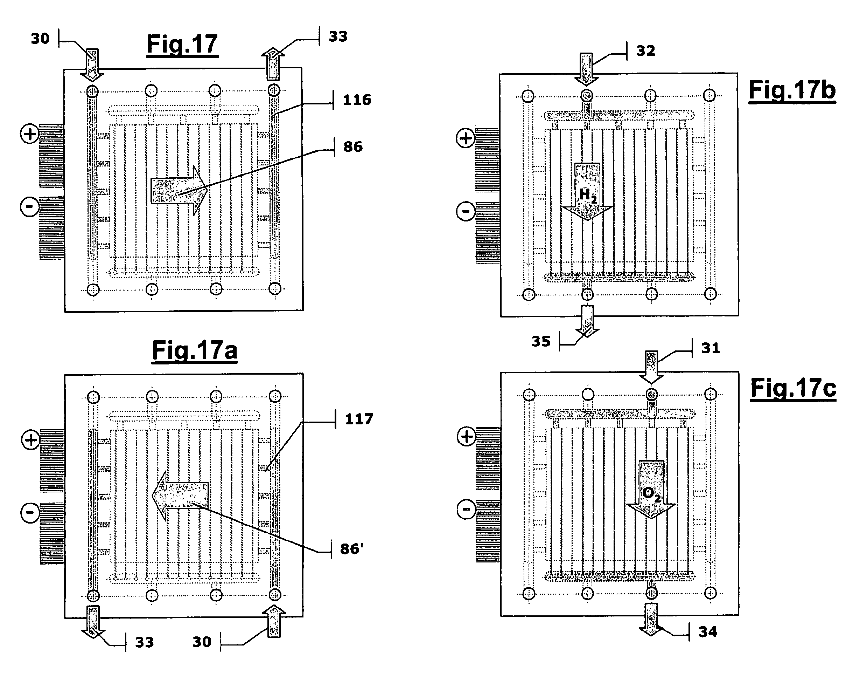

Die Figuren 17 bis 17c geben eine Draufsicht auf die Versorgung der einzelnen Zellen mit Kühlmedium sowie mit Wasserstoff und Sauerstoff wieder.

Bei Figur 17 ist der Kühlkreislauf 116, bei Figur 17a der Kühlkreislauf 117 wiedergegeben, wobei deutlich wird, dass diese gegeneinander geführt werden. Die Mediumzuleitung für das Kühlmedium zeigt das Bezugszeichen 30 und das für die Ableitung das Bezugszeichen 33. Ähnlich sind die Darstellungen nach Figur 17b und 17c zu sehen, wobei die Zuführung bzw. die Mediumzuleitung 32 für Wasserstoff und die Ableitung auf der Wasserstoffseite mit 35 bezeichnet ist.

Figur 17c die Mediumzuleitung für Sauerstoff mit 31 und die Ableitung mit 34 bezeichnet ist. Diese Darstellungen zeigen gut, wie gleichmäßig die Verteilung über die Fläche des Innenstapels 109 mit dieser Ausbildung möglich ist.

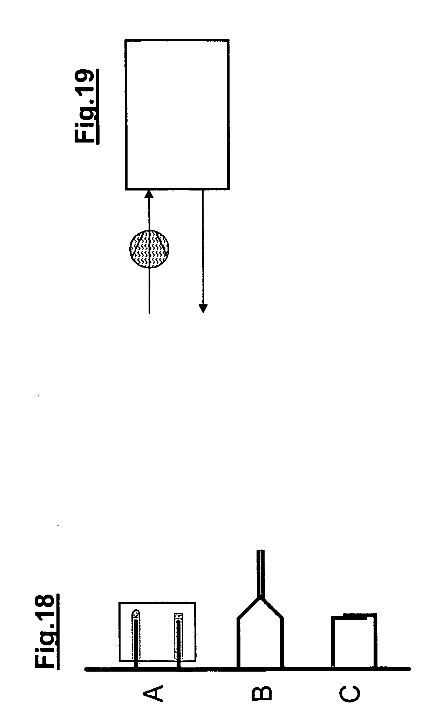

Figur 18 gibt verschiedene Varianten der Stromfahnenverschaltung wieder. Nach A werden z.B. benachbarte Stromfahnen eines Potentials z.B. (+) mit einem Stecker zusammengefasst. Bei B werden die Stromfahnen zusammengebogen und verschweißt, geklebt, geklemmt, etc.. Bei C werden sie zusammengebogen und verschweißt.

Figur 19 zeigt ein Brennstoffzellenmodul 12 mit einer Kühlluftversorgung (Verdichter) und der Ableitung der erwärmten Kühlluft in die Umgebung.

Alle genannten Merkmale, auch die den Zeichnungen allein zu entnehmenden, werden allein und in Kombination als erfindungswesentlich angesehen.

## Patentansprüche

1. Brennstoffzellenmodul bestehend aus einem Zellenstapel (1) mit Endplatten (13,14) auf der Anoden- und der Kathodenseite mit einem Spannsystem (17) und mit Medienanschlüssen (30 - 35) für Sauerstoff, Wasserstoff und Kühlmedium und mit mehreren Einzelzellen (7i, 7i+1, 7i+2), die jeweils eine Membran-Elektroden-Einheit (10) aufweisen, die aus einer Elektrodenanode und -Kathode (5, 6) aus porösem, gasdurchlässigem Material und einer dazwischen angeordneten Elektrolytmembran (2) mit Anoden- und Kathodenkatalysator (3, 4) bestehen und über Stromabnehmer (15,16) auf der Anoden- und Kathodenseite verfügen,
**dadurch gekennzeichnet,**
**dass** die Medienzuleitungen (30, 31, 32) und die Medienableitungen (33, 34, 35) einem Kühl- und Medienmoduls (40) zugeordnet sind, das unter Verzicht auf Bipolarplatten nur der Bereitstellung von Kühl- und Gaskanälen (42, 43, 44) und der Stapelbildung und über Elektrodenabdeckungen (72, 92) der Ableitung nicht aber der Durchleitung des Stromes dienend ausgebildet ist und dass jeweils auf beiden Seiten des Kühl- und Medienmoduls (40) entweder die Wasserstoffelektrode (5, 5') oder die Sauerstoffelektrode (6, 6') der Membran-Elektroden-Einheit (10)der benachbarten Einzelzelle (7i, 7i+1, 7i+2) angeordnet ist.

2. Brennstoffzellenmodul nach Anspruch 1,
**dadurch gekennzeichnet,**
**dass** das Kühl- und Medienmodul (40) mit Kühlkanälen (42) und Zuleitungskanälen (65) für Gas aus einer elastischen Struktur, vorzugsweise aus zwei oder mehr Bauteilen (60, 60') bestehend ausgebildet ist (Figur 9).

3. Brennstoffzellenmodul nach einem der vorhergehenden Ansprüche,
**dadurch gekennzeichnet,**
**dass** der Innenstapel (109) eines Zellenstapels (1) über elastisch ausgebildete oder versetzt angeordnete Abstandshalter (79) eine elastische Verformung und Atmung in der Stapelachse (111) zulassend ausgebildet ist (Figur 3a, 13).

4. Brennstoffzellenmodul nach einem der vorhergehenden Ansprüche,
**dadurch gekennzeichnet,**
**dass** das Kühl- und Medienmodul (40) mit Kühlkanälen (63) und Gaskanälen (42, 43, 44) aus Blech, Folie oder Kaltband aus Edelstahl oder aus Kunststofffolie bestehend ausgebildet ist (Figur 3e, 7, 7a, 7b, 8).

5. Brennstoffzellenmodul nach einem der vorhergehenden Ansprüche,
**dadurch gekennzeichnet,**
**dass** das Kühl- und Medienmodul (40) mit Kühlkanälen (63) und Gaskanälen (65) aus Kunststoff, vorzugsweise Kunststofffolie, bestehend ausgebildet ist (Figur 3, 5, 6,9).

6. Brennstoffzellenmodul nach Anspruch 3,
**dadurch gekennzeichnet,**
**dass** der Druck in den Kühlkanälen (42) und den Gaskanälen (43, 44) für Wasserstoff und Sauerstoff veränderbar und der gewünschten Flächenpressung an der Membran-Elektroden-Einheit (10) entsprechend einstellbar ist (Figur 7).

7. Brennstoffzellenmodul nach einem der vorhergehenden Ansprüche,
**dadurch gekennzeichnet,**
**dass** die Elektrodenabdeckungen (72, 72') und die Bauteile (90, 90') des Kühlkanals (42) durch Abstandshalter (79) getrennt sind.

8. Brennstoffzellenmodul nach einem der vorhergehenden Ansprüche,
**dadurch gekennzeichnet,**
**dass** die Zuleitungskanäle (65) für Gas eine partielle Zuleitung (66, 66') aufweisend und eine partielle Gasverteilungszone (67) und eine partielle Gasverteilungszone (68) bedienend ausgebildet sind (Figur 5).

9. Brennstoffzellenmodul nach einem der vorhergehenden Ansprüche,
**dadurch gekennzeichnet,**
**dass** die Elektrodenabdeckung (72, 92') des Kühl- und
Medienmoduls (40) Gasdurchlässe (73) für Wasserstoff oder
Sauerstoff und Ableitungen (74) für Restwasserstoff, Restsauerstoff und Reaktionsprodukte auf der der Elektrodenanode und -kathode (5, 6) zugewandten Seite aufweisen (Figur 7).

10. Brennstoffzellenmodul nach Anspruch 9,
**dadurch gekennzeichnet,**
**dass** in den als durchgehende Rille ausgebildeten Ableitungen (74) der Druck kleiner als in den Gaskanälen (43, 44) eingestellt ist.

11. Brennstoffzellenmodul nach einem der vorhergehenden Ansprüche,
**dadurch gekennzeichnet,**
**dass** die Einzelzellen (7i, 7i+1, 7i+2) als gestapelter Fächer (56) geschichtet ausgebildet und angeordnet sind.

12. Brennstoffzellenmodul nach einem der vorhergehenden Ansprüche,
**dadurch gekennzeichnet,**
**dass** die Einzelzellen (7i, 7i+1, 7i+2) als paralleler Fächer (57) geschichtet ausgebildet und angeordnet sind.

13. Brennstoffzellenmodul nach einem der vorhergehenden Ansprüche,
**dadurch gekennzeichnet,**
**dass** der Zellenstapel (1) aus einem äußeren Paket von Bauteilringen und von Dichtringen (83, 84, 85) oder einem als Außenstapel (110) dienenden Zellenrahmen (50) sowie dem Innenstapeln (109) aus Membran-Elektroden-Einheit (10) und dem Kühl- und Medienmodul (40) bestehend ausgebildet ist (Figur 11, 13).

14. Brennstoffzellenmodul nach einem der vorhergehenden Ansprüche,
**dadurch gekennzeichnet,**
**dass** die Länge des Innenstapels (109) gegenüber der Länge des Außenstapels (110) ein definiertes Maß (Untermaß, Übermaß) aufweist.

15. Brennstoffzellenmodul nach einem der vorhergehenden Ansprüche,
**dadurch gekennzeichnet,**
**dass** der Zellenstapel (1) Kühlkanalbleche (90, 91) gleicher Länge und Breite aufweist, wobei die Bleche (90, 91) die einzelnen Funktionsräume (42, 43, 44) mit den dazwischen liegenden Dichtungen (83, 84, 85) begrenzen und der von ihnen gebildete Zellenrahmen (50) die notwendigen Versorgungskanäle (92, 92', 139, 140, 140') aufweist, von denen Querkanäle (93, 133, 133', 134, 135), Verbindungskanäle (136, 138), Verteilkanäle (134), Verbindungsöffnungen (142, 142') und Ableitkanäle (143) als Anschluss der Funktionsräume (41, 42) abgehend vorgesehen sind (Figur 3a und Figur 11 a).

16. Brennstoffzellenmodul nach Anspruch 15,
**dadurch gekennzeichnet,**
**dass** die dem Zellenrahmen (50) zugeordneten Versorgungskanäle (92) für Wasserstoff, Sauerstoff und das Kühlmedium sowie Entsorgungskanäle (92') für Reaktionsprodukte und überschüssige Gase parallel und quer verlaufend ausgebildet sind.

17. Brennstoffzellenmodul nach einem der vorhergehenden Ansprüche,
**dadurch gekennzeichnet,**
**dass** der Kühlstrom in den Kühlkanälen (42, 42') von Einzelzelle (7) zu Einzelzelle (7i+1, 7i+2) gegenläufig geführt und vorzugsweise von zwei entkoppelten Kühlsystemen versorgt ist (Figur 13a).

18. Brennstoffzellenmodul nach einem der vorhergehenden Ansprüche,
**dadurch gekennzeichnet,**
**dass** jede Einzelzelle (7i, 7i+1, 7i+2) eine Stromführungsschicht (45, 45') aufweist, die jeweils durch die Außenwand (48) des Zellenstapels (1) nach außen geführt und mit einem Stecker (80) versehen und verschaltet ist (Figur 6, Figur 10 (Kunststoff)).

19. Brennstoffzellenmodul nach einem der vorhergehenden Ansprüche,
**dadurch gekennzeichnet,**
**dass** die Oberfläche (36) der Elektrodenanode und -kathode (5, 6) mit der elektrisch leitenden Stromführungsschicht (45, 45', 105, 105', 106, 107) versehen ist (Figur 3a - c - Kunststoff und Blech).

20. Brennstoffzellenmodul nach einem der vorhergehenden Ansprüche,
**dadurch gekennzeichnet,**
**dass** die Stromführungsschicht (107,107') in der Ebene der Reaktionszone (R1; R2) und des Anoden- und Kathodenkatalysators (3, 4) angeordnet ist.

21. Brennstoffzellenmodul nach einem der vorhergehenden Ansprüche,
**dadurch gekennzeichnet,**
**dass** die Stromführungsschicht (106, 106') in der Ebene zwischen der Elektrodenanode und -kathode (5, 6) und dem Kühl- und Medienmodul (40) angeordnet ist.

22. Brennstoffzellenmodul nach einem der vorhergehenden Ansprüche,
**dadurch gekennzeichnet,**
**dass** die Elektrodenanode und -kathode (5, 6) wärmeleitend, porös bezüglich Gasdiffusion und -konvektion und chemisch und thermisch stabil ausgeführt sind.

23. Brennstoffzellenmodul nach einem der vorhergehenden Ansprüche,
**dadurch gekennzeichnet,**
**dass** der oder die Zellenstapel (1) in einem belüftbaren Stapelgehäuse (100) untergebracht ist/sind, das über Schnittstellen (104) für die Medienver- und - entsorgung und die Be- und Entlüftung (101, 102) des Stapelgehäuses (100) sowie für die Spannungs- und Drucküberwachung verfügt (Figur 10b).

24. Brennstoffzellenmodul nach einem der vorhergehenden Ansprüche, **dadurch gekennzeichnet,**
**dass** der Zellenstapel (1) parallel verschaltete Einzelzellen (7) aufweist (Figur 13).

25. Brennstoffzellenmodul nach einem der vorhergehenden Ansprüche,
**dadurch gekennzeichnet,**
**dass** der Zellenstapel (1) aus Teilstapeln (124, 125) zusammengesetzt ist, von denen der Teilstapel (124) als Startstapel für die anderen Teilstapel (125) dienend ausgebildet und geschaltet und mit einem Wärmetauscher (120) verbunden ist (Figur 13b).

26. Brennstoffzellenmodul nach einem der vorhergehenden Ansprüche,
**dadurch gekennzeichnet,**
**dass** die Teilstapel (124, 125) parallel geschaltet sind, wobei deren Einzelzellen (7) jeweils in Serie geschaltet sind.

27. Brennstoffzellenmodul nach einem der vorhergehenden Ansprüche, **dadurch gekennzeichnet,**
**dass** die Elektrodenabdeckungen (72, 72', 158) mit Stromfahnen (130, 131) versehen sind, die der Stromleitung aus den Reaktionsräumen über die Elektroden (5, 6) und die Elektrodenabdeckungen (72) zur Außenseite (48) des Stapels (1) dienen und dort miteinander verschaltet sind und zwar durch Verschweißen der Stromfahnen, Verklemmen oder Verschalten mit Steckern.

## Claims

1. A fuel cell module comprising a cell stack (1) with end plates (13, 14) on the anode and cathode side with a clamping system (17) and with media connections (30 - 35) for oxygen, hydrogen and a cooling medium and with a plurality of individual cells (7i, 7i+1, 7i+2) which each have a membrane-electrode unit (10), which consists of an electrode anode and cathode 5, 6) consisting of a porous, gas-permeable material and an electrolyte membrane (2) disposed inbetween with an anode and cathode catalytic converter (3, 4) and which has a current consumer (15, 16) on the anode and cathode side,
**characterized**
**in that** the medium feed lines (30, 31, 32) and the medium discharge lines (33, 34, 35) are assigned to a cooling and media module (40) which, while dispensing with bipolar plates, is designed only to serve to provide cooling and gas ducts (42, 43, 44) and formation of the stack and discharge via electrode covers (72, 92), but not conductance of the current, and that either the hydrogen electrode (5, 5') or the oxygen electrode (6, 6') of the membrane electrodes unit (10) of the neighboring individual cell (7i, 7i+1, 7i+2) is arranged respectively on both sides of the cooling and media module (40).

2. The fuel cell module according to Claim 1,
**characterized**
**in that** the cooling and media module (40) with the cooling ducts (42) and feed line ducts (65) for gas is formed out of an elastic structure, preferably of two or more components (60, 60') (Figure 9).

3. The fuel cell module according to any one of the preceding claims,
**characterized**
**in that** the inner stack (109) of a stack of cells (1) is formed to allow elastic deformation and breathing in the stack axis (111) via an elastically formed or offset spacer (79) (Figure 3a, 13).

4. The fuel cell module according to any one of the preceding claims,
**characterized**
**in that** the cooling and media module (40) with cooling ducts (63) and gas ducts (42, 43, 44) is formed out of metal sheet, foil or cold strip made out of stainless steel or out of plastic foil (Figure 3e, 7, 7a, 7b, 8).

5. The fuel cell module according to any one of the preceding claims,
**characterized**
**in that** the cooling and media module (40) with cooling ducts (63) and gas ducts (65) is formed out of plastic, preferably plastic foil (Figure 3, 5, 6, 9).

6. The fuel cell module according to Claim 3,
**characterized**
**in that** the pressure in the cooling ducts (42) and gas ducts (43, 44) for hydrogen and oxygen is variable and the desired surface pressure on the membrane electrodes unit (10) is correspondingly adjustable (Figure 7).

7. The fuel cell module according to any one of the preceding claims,
**characterized**
**in that** the electrode covers (72, 72') and the components (90, 90') of the cooling duct (42) are kept separate by spacers (79).

8. The fuel cell module according to any one of the preceding claims,
**characterized**
**in that** the feed ducts (65) for gas have a partial feed line (66, 66') and are designed to feed a partial gas distribution zone (67) and a partial gas distribution zone (68) (Figure 5).

9. The fuel cell module according to any one of the preceding claims,
**characterized**
**in that** the electrode cover (72, 92') for the cooling and media module (40) has gas passages (73) for hydrogen or oxygen and discharge means (74) for residual hydrogen, residual oxygen and reaction products on the opposite side to the electrode anode and electrode cathode (5, 6) (Figure 7).

10. The fuel cell module according to Claim 9,
**characterized**
**in that** the pressure is set to be lower in the discharge means (74) formed as a continuous groove than that in the gas ducts (43, 44).

11. The fuel cell module according to any one of the preceding claims,
**characterized**
**in that** the individual cells (7i, 7i+1, 7i+2) are formed layered and arranged as stacked fan-shaped jump (56).

12. The fuel cell module according to any one of the preceding claims,
**characterized**
**in that** the individual cells (7i, 7i+1, 7i+2) are formed layered and arranged as parallel fan-shaped jump (57).

13. The fuel cell module according to any one of the preceding claims,
**characterized**
**in that** the cell stack (1) consists of an outer package of component rings and sealing rings (83, 84, 85) or a cell frame (50) serving as an outer stack (110) as well as the inner stack (109) made out of a membrane electrodes unit (10) and the cooling and media module (40) (Figure 11, 13).

14. The fuel cell module according to any one of the preceding claims,
**characterized**
**in that** the length of the inner stack (109) has a defined size (undersize, oversize) compared to the length of the outer stack (110).

15. The fuel cell module according to any one of the preceding claims,
**characterized**
**in that** the cell stack (1) has cooling duct metal sheets (90, 91) of the same length and width, wherein the metal sheets (90, 91) limit the individual function spaces (42, 43, 44) with the seals (83, 84, 85) lying inbetween and cell frame (50) formed from them has the necessary supply ducts (92, 92', 139, 140, 140'), from which transverse ducts (93, 133, 133', 134, 135), connecting ducts (136, 138), distribution ducts (134), connecting openings (142, 142') and discharge ducts (143) are provided going outwards as a connection to the function spaces (41, 42) (Figure 3a and Figure 11 a).

16. The fuel cell module according to Claim 15,
**characterized**
**in that** the supply ducts (92) assigned to the cell frame (50) for hydrogen, oxygen and the cooling medium, as well as disposal ducts (92') for reaction products and excess gases, are formed in parallel and transversally.

17. The fuel cell module according to any one of the preceding claims,
**characterized**
**in that** the cooling stream in the cooling ducts (42, 42') are led countercurrently from individual cell (7) to individual cell (7i+1, 7i+2) and is preferably supplied by two de-coupled cooling systems (Figure 13a).

18. The fuel cell module according to any one of the preceding claims,
**characterized**
**in that** every individual cell (7i, 7i+1, 7i+2) has a current conducting layer (45, 45') which respectively conducts outwards through the outer wall (48) of the cell stack (1) and is fitted with a plug (80) and is interconnected (Figure 6, Figure 10 (plastic)).

19. The fuel cell module according to any one of the preceding claims,
**characterized**
**in that** the surface (36) of the electrode anode and electrode cathode (5, 6) has the electricity conducting layer (45, 45', 105, 105', 106, 107) (Figure 3a - c - plastic and metal sheet).

20. The fuel cell module according to any one of the preceding claims,
**characterized**
**in that** the electricity conducting layer (107,107') is arranged in the plane of the reaction zone (R1; R2) and the anode and cathode catalytic converters (3, 4).

21. The fuel cell module according to any one of the preceding claims,
**characterized**
**in that** the current conducting layer (106, 106') is arranged in the plane between the electrode anode and electrode cathode (5, 6) and the cooling and media module (40).

22. The fuel cell module according to any one of the preceding claims,
**characterized**
**in that** the electrode anode and electrode cathode (5, 6) are heat conducting, porous with respect to gas diffusion and convection and are chemically and thermally stable.

23. The fuel cell module according to any one of the preceding claims,
**characterized**
**in that** the cell stack(s) (1) is/are housed in a ventilatable stack housing (100), which has interfaces (104) for supply and discharge of media and aeration and ventilation (101, 102) of the stack housing (100) as well as for monitoring voltage and pressure (Figure 10b).

24. The fuel cell module according to any one of the preceding claims,
characterized
the cell stack (1) has individual cells (7), which are switched in parallel (Figure 13).

25. The fuel cell module according to any one of the preceding claims,
**characterized**
**in that** the cell stack (1) is composed of partial stacks (124, 125) of which the partial stack (124) is designed to serve as a starting stack for the other partial stacks (125) and is switched and connected with a heat exchanger (120) (Figure 13b).

26. The fuel cell module according to any one of the preceding claims,
**characterized**
**in that** the part stack (124, 125) are switched in parallel, wherein their individual cells (7) are respectively switched in series.

27. The fuel cell module according to any one of the preceding claims,
**characterized**
**in that** the electrode covers (72, 72', 158) have current-carrying lugs (130, 131) which serve as a means of conducting current out of the reaction spaces over the electrodes (5, 6) and the electrode covers (72) to the outer side (48) of the stack (1) and are interconnected there with each other through welding of the current-carrying lugs, jamming together or interconnection with plugs.

## Revendications

1. Module de piles à combustibles se composant d'une pile de cellules (1) avec des plaques terminales (13, 14) côté anode et côté cathode avec un système de serrage (17) et avec des raccords de fluides (30 - 35) pour l'oxygène, l'hydrogène et le produit réfrigérant et avec une pluralité de cellules individuelles (7i, 7i+1, 7i+2) présentant respectivement une unité membrane-électrode (10) qui se compose d'une anode-électrode et cathode-électrode (5, 6) en matériau poreux perméable aux gaz et une membrane électrolyte (2) disposée entre ces dernières avec catalyseur d'anode et catalyseur de cathode (3, 4) et disposent de consommateurs de courant (15, 16) côté anode et côté cathode,
**caractérisé**
**en ce que** les conduites d'alimentation en fluide (30, 31, 32) et les conduites de décharge de fluide (33, 34, 35) sont affectées à un module de refroidissement et de fluides (40) qui, renonçant à des plaques bipolaires, servent uniquement à la mise à disposition de canaux de refroidissement et de gaz (42, 43, 44) et et la formation de piles et, via des couvercles d'électrodes (72, 92), à la décharge, et non à la transmission du courant, et en ce qu'est disposée chaque fois sur les deux côtés du module de refroidissement et de fluides (40) soit l'électrode à hydrogène (5, 5') soit l'électrode à oxygène (6, 6') de l'unité membrane-électrode (10) des cellules individuelles (7i, 7i+1, 7i+2) adjacentes.

2. Module de piles à combustibles selon la revendication 1,
**caractérisé**
**en ce que** le module de refroidissement et de fluides (40) avec canaux de refroidissement (42) et conduite d'alimentation (65) pour gaz se compose d'une structure élastique, de préférence à deux ou plusieurs composants (60, 60') (Figure 9).

3. Module de piles à combustibles selon l'une quelconque des revendications précédentes,
**caractérisé**
**en ce que** la pile intérieure (109) d'une pile de cellules (1) est formée de manière à permettre, via des pièces d'écartement (79) élastiques ou disposées de manière décalée l'une par rapport à l'autre, une déformation élastique et la respiration dans l'axe de la pile (111) (Figure 3a, 13).

4. Module de piles à combustibles selon l'une quelconque des revendications précédentes,
**caractérisé**
**en ce que** le module de refroidissement et de fluides (40) avec canaux de refroidissement (63) et canaux de gaz (42, 43, 44) se compose de tôle, feuille ou feuillard laminé à froid en acier spécial ou en plastique (Figure 3e, 7, 7a, 7b, 8).

5. Module de piles à combustibles selon l'une quelconque des revendications précédentes,
**caractérisé**
**en ce que** le module de refroidissement et de fluides (40) avec canaux de refroidissement (63) et canaux de gaz (42, 43, 65) se compose de matière plastique, de préférence une feuille en plastique (Figure 3e, 6, 7a, 7b, 9).

6. Module de piles à combustibles selon la revendication 3,
**caractérisé**
**en ce que** la pression est variable dans les canaux de refroidissement (42) et les canaux de gaz (43, 44) pour l'hydrogène et l'oxygène, et la pression superficielle souhaitée au niveau de l'unité membrane-électrode (10) est réglable en conséquence (Figure 7).

7. Module de piles à combustibles selon l'une quelconque des revendications précédentes,
**caractérisé**
**en ce que** les couvercles d'électrodes (72, 72') et les composants (90, 90') du canal de refroidissement (42) sont séparés par des pièces d'écartement (79).

8. Module de piles à combustibles selon l'une quelconque des revendications précédentes,
**caractérisé**
**en ce que** les conduites d'alimentation (65) pour gaz présentent une conduite d'alimentation (66, 66') partielle et alimentent une zone de distribution de gaz partielle (67) et une zone de distribution de gaz partielle (68) (Figure 5).

9. Module de piles à combustibles selon l'une quelconque des revendications précédentes,
**caractérisé**
**en ce que** les couvercles d'électrodes (72, 92') du module de refroidissement et de fluides (40) présentent des passages de gaz (73) pour l'hydrogène ou l'oxygène et des décharges (74) pour l'hydrogène résiduel, l'oxygène résiduel et les produits réactionnels au côté orienté vers l'anode-électrode et la cathode-électrode (5, 6) (Figure 7).

10. Module de piles à combustibles selon la revendication 9,
**caractérisé**
**en ce que**, dans les décharges (74) formées comme rainures continues, la pression réglée est inférieure à celle qui prévaut dans les canaux de gaz (43, 44).

11. Module de piles à combustibles selon l'une quelconque des revendications précédentes,
**caractérisé**
**en ce que** les cellules individuelles (7i, 7i+1, 7i+2) sont formées en couches et disposées comme éventail empilé (56).

12. Module de piles à combustibles selon l'une quelconque des revendications précédentes,
**caractérisé**
**en ce que** les cellules individuelles (7i, 7i+1, 7i+2) sont formées en couches et disposées comme éventail parallèle (57).

13. Module de piles à combustibles selon l'une quelconque des revendications précédentes,
**caractérisé**
**en ce que** la pile de cellules (1) se compose d'un paquet extérieur de bagues de composant et de bagues d'étanchéité (83, 84, 85) ou d'un cadre de cellules (50) servant de pile extérieure (110) ainsi que des piles intérieures (109) se composant de l'unité membrane-électrode (10) et du module de refroidissement et de fluides (40) (Figure 11, 13).

14. Module de piles à combustibles selon l'une quelconque des revendications précédentes,
**caractérisé**
**en ce que** la longueur de la pile intérieure (109) a une valeur définie par rapport à la longueur de la pile extérieure (110) (sous-mesure, surmesure).

15. Module de piles à combustibles selon l'une quelconque des revendications précédentes,
**caractérisé**
**en ce que** la pile de cellules (1) présente des canaux de refroidissement (90, 91) de la même longueur et la même largeur, étant donné que les tôles (90, 91) délimitent les espaces fonctionnels individuels (42, 43, 44) avec les joints d'étanchéité intercalés (83, 84, 85) et le cadre de cellules (50) qu'ils forment présente les canaux alimentation (92, 92', 139, 140, 140') nécessaires, dont des canaux transversaux (93, 133, 133', 134, 135), des canaux de liaison (136, 138), canaux de distribution (134), orifices de communication (142, 142') et canaux de décharge (143) sont prévus comme raccords partant des espaces fonctionnels (41, 42) (Figure 3a et Figure 11 a).

16. Module de piles à combustibles selon la revendication 15,
**caractérisé**
**en ce que** les canaux d'alimentation (92) affectés au cadre de piles (50) pour l'hydrogène, l'oxygène et le produit réfrigérant ainsi que les canaux d'élimination (92') pour les produits réactionnels et les gaz en excès sont parallèles et transversaux.

17. Module de piles à combustibles selon l'une quelconque des revendications précédentes,
**caractérisé**
**en ce que** le courant de refroidissement dans les canaux de refroidissement (42, 42') est antagoniste de la cellule individuelle (7) à la cellule individuelle (7i+1, 7i+2) et de préférence alimenté par deux circuits de refroidissement découplés (Figure 13a).

18. Module de piles à combustibles selon l'une quelconque des revendications précédentes,
**caractérisé**
**en ce que** chaque cellule individuelle (7i, 7i+1, 7i+2) présente une couche conductrice de courant (45, 45') qui est conduite respectivement à travers la paroi extérieure (48) de la pile de cellules (1) vers l'extérieur et est dotée d'une fiche (80) et interconnectée (Figure 6, Figure 10 (plastique)).

19. Module de piles à combustibles selon l'une quelconque des revendications précédentes,
**caractérisé**
**en ce que** la surface (36) de l'anode-électrode et la cathode-électrode (5, 6) comporte la couche conductrice de courant (45, 45', 105, 105', 106, 107) (Figure 3a - c - plastique et tôle).

20. Module de piles à combustibles selon l'une quelconque des revendications précédentes,
**caractérisé**
**en ce que** la couche conductrice de courant (107,107') est disposée dans le plan de la zone de réaction (R1; R2) et du catalyseur d'anode et de cathode (3, 4).

21. Module de piles à combustibles selon l'une quelconque des revendications précédentes,
**caractérisé**
**en ce que** la couche conductrice de courant (106, 106') est disposée dans le plan situé entre l'anode-électrode et la cathode-électrode (5, 6) et le module de refroidissement et de fluides (40).

22. Module de piles à combustibles selon l'une quelconque des revendications précédentes,
**caractérisé**
**en ce que** l'anode-électrode et la cathode-électrode (5, 6) sont thermoconductrices, poreuses par rapport à la diffusion et la convection gazeuses et sont chimiquement et thermiquement stables.

23. Module de piles à combustibles selon l'une quelconque des revendications précédentes,
**caractérisé**
**en ce que** la ou les piles de cellules (1) sont logée(s) dans un boîtier de piles (100) aérable qui comporte des points de jonction (104) pour l'alimentation en fluides et leur élimination ainsi que l'aération et la désaération (101, 102) du boîtier de pile (100) ainsi que pour la surveillance de la tension et de la pression (Figure 10b).

24. Module de piles à combustibles selon l'une quelconque des revendications précédentes,
**caractérisé**
**en ce que** la pile de cellules (1) présente des cellules individuelles (7) connectées en parallèle (Figure 13).

25. Module de piles à combustibles selon l'une quelconque des revendications précédentes,
**caractérisé**
**en ce que** la pile de cellules (1) se compose de piles partielles (124, 125) dont la pile partielle (124) est connectée et sert de pile de départ pour les autres piles partielles (125) et est raccordée à un échangeur de chaleur (120) (Figure 13b).

26. Module de piles à combustibles selon l'une quelconque des revendications précédentes,
**caractérisé**
**en ce que** les piles partielles (124, 125) sont connectées en parallèle, étant donné que leurs cellules individuelles (7) sont respectivement connectées en série.

27. Module de piles à combustibles selon l'une quelconque des revendications précédentes,
**caractérisé**
**en ce que** les couvercles d'électrodes (72, 72', 158) comportent des queues conductrices de courant (130, 131) qui servent à conduire le courant hors des espaces de réaction via les électrodes (5, 6) et les couvercles d'électrodes (72) vers la face extérieure (48) de la pile (1) et y sont connectées l'une avec l'autre par soudage des queues conductrices de courant, serrage ou connexion à fiches.
